(19) Europäisches Patentamt
European Patent Office
Office européen des brevets

(11) **EP 1 830 103 A1**

(12) **EUROPEAN PATENT APPLICATION**
published in accordance with Art. 158(3) EPC

(43) Date of publication:
**05.09.2007 Bulletin 2007/36**

(51) Int Cl.:
***F16H 13/08*** (2006.01)

(21) Application number: **05818026.6**

(22) Date of filing: **12.12.2005**

(86) International application number:
**PCT/IB2005/003725**

(87) International publication number:
**WO 2006/064328 (22.06.2006 Gazette 2006/25)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.12.2004 MX PA04012701**

(71) Applicant: **CID Centro de Investigación y Désarrollo Tecnológico, S.A. de C.V. Lerma Estado de Mexico C.P. 52000 (MX)**

(72) Inventors:
 • **URIBE-URIBE, Héctor**
 **NA Querétaro, Qro. (MX)**

 • **ORTIZ-BARRETO, Joel**
 **76130 Querétaro, Qro. (MX)**
 • **TORRES-SERVIN, Alberto**
 **76115 Querétaro, Qro. (MX)**
 • **MELENDEZ-SÁNCHEZ, José, Luis**
 **36090 Guanajuato, Gto. (MX)**

(74) Representative: **Grünecker, Kinkeldey, Stockmair & Schwanhäusser Anwaltssozietät Maximilianstrasse 58 80538 München (DE)**

(54) **SELF-ADJUSTABLE TRACTIVE PLANETARY GEAR TRANSMISSION**

(57) A self-adjustable planetary roller transmission is described, comprising a conical sun roller with a tractive surface on its side wall; an annular tractive track having conical surface concentrically separated from the sun roller; conical planetary rollers with tractive surfaces located between the sun roller tractive surface and the annular tractive track; a planet carrier wherein the planetary rollers are rotatory mounted and separated therefrom.

When the tractive surfaces of the transmission wear out, the planetary rollers can adjust their axial and radial positions between the sun roller tractive surface and the annular tractive track; consequently, the required tractive condition to transmit the power is maintained with high mechanical efficency, and low noise and vibration levels. The transmission operates with or without elasto-hydro-dynamic fluids.

FIG. 1

**Description**

## FIELD OF THE INVENTION

The present invention relates to the techniques used in designing and manufacturing power roller transmissions and, more particularly, it relates to a self-adjustable tractive planetary roller transmission.

## BACKGROUND OF THE INVENTION

It is well known that traditional power transmission systems incorporating gears, exhibit inherent operation problems, such as upsets in their parts, mechanical shortcomings, high noise and vibration levels. In particular, these two latter disadvantages are significant when said traditional power transmissions are incorporated into appliances, recreational vehicles, wherein users are not willing to hear noises or feel annoying vibrations.

Due to the above, the development of power transmissions is currently focused in providing models exhibiting low noise and vibration levels. However, it is worth mentioning that manufacturers of transmissions look for their products to be highly efficient, compact in size, and easy to manufacture.

In order to prevent noise, mechanical shortcomings, and vibrations, in the pior art there are planetary roller transmissions working based on the tractive surface principle, which makes unnecessary the use of crown grears. In particular, said transmissions are generally conformed by a sun member or roller having a tractive surface; an annular tractive track concentrically separated from the sun; and planets or planetary rollers separated from each other and pressed in the gap existing between the sun roller and the annular tractive track. Particularly, the sun roller is attached to a shaft, which can be an input shaft or an output shaft, while the planets or planetary rollers are mounted on a planet carrier attached to another shaft axially lined up with the shaft attached to the sun roller. With this arrangement, a power source connected to the shaft attached to the sun roller makes it to rotate, and if there is the required tractive condition, the planets or planetary rollers also begin to move. With the rotation of the planets, the output shaft begins to move at a rotation speed other than that of the input shaft, making the power to be transmitted to be used as desired.

It is worth mentioning that, in this kind of planetary roller transmissions having tractive surfaces, in order to ensure the tractive condition required for the planets or planetary rollers to move, it is preferred the tractive surfaces of the sun roll, planets or planetary rollers, as well as that of the annular tractive track to have an inclination angle in respect to the transmission axis, it is to say, they are conical surfaces.

An example of this kind of planetary roller transmissions having conical tractive surfaces is found in the US Patent No. US 4,846,008. This transmission incorporates means to push axially the sun roller and to place it between the planets, preventing sliding to occur between the transmission tractive surfaces. However, a problem with these transmissions is that such means to push axially the sun roller is provided as a cam, which over time has to be continuously adjusted in order to ensure the proper operation of the transmission.

Another important aspect of this transmission is a slight curvature on the tractive surfaces of the planets to prevent sliding under low load conditions and to reduce stress peaks between surfaces. However, it is obvious that by the use of the roller transmission said curvature may be gradually lost due to the natural wear of the tractive surfaces and, therefore, the transmission does not work with its original efficiency.

Another planetary roller transmission having conical tractive surfaces may be found in the Japanese patent application No. 05-071483, published under number 06-280981. One feature of this transmission is the conical rollers including a conical section having an edge parallel to the roller transmission axis. The edge is furthermore in contact with a movement restraining external ring, this element being the most important technical aspect of this transmission. This arrangement makes possible for the roller transmission to have a controlled movement from left to right, it is to say, in axial direction. However, this transmission is not away from a wear process of the tractive surfaces which, sooner or later, will require the disassemble of the transmission in order to provide adjustment and maintenance to its parts which are countless, as it may be seen throughout said patent.

Finally, it is worth referring to the US Patent No. U.S. 6,406,399, describing a planetary roller transmission having conical tractive surfaces. From the teachings of said document, it is particularly interesting the provision of two tractive surfaces in the sun member making the transmission to be provided with two annular tractive tracks and two sets of planetary rollers, each of such sets being placed between one tractive track of the sun and one annular tractive track. Likewise, this roller transmission has the essential feature that every planetary roller from the first set of rollers is in contact with a planetary roller from the second set. Furthermore, in this roller transmission, one of the annular tractive tracks can rotate, while the other track remains fixed.

According to the description of said document, the roller transmisision arrangement provided prevents the sliding or slipping of the following tractive zones: i) between the sun tractive surfaces and the planetary rollers from any set of rollers; ii) between the annular tractive tracks and the planets of from every set; and iii) between the rollers of both sets of rollers.

In spite of the above, this roller transmission undergoes wear processes, mainly on its tractive surfaces and thus, over time, the pieces loose among each other the required traction for the roller transmission to work. Therefore, it is required to replace and adjust certain elements, especially the planetary rollers. Furthermore, due to the fact that the roller transmission has two planetary systems, the assembly and maintenance of the multiple pieces becomes hard.

Another important aspect of planetary roller transmissions from the prior art known by the ones skilled in the art, is that roller transmissions must internally use elasto-hydrodynamic or tractive lubricants to reach the required tractive coefficient for the roller transmission to start moving. However, these lubricants are highly specific, highly expensive, and leave residues which gradually modify the tractive surface. Furthermore, these lubricants limit the roller transmission to be manufactured using certain materials only, due to chemical attack and mechanical resistance reasons, since elasto-hydrodynamic lubricants require high pressures in a normal direction to transmit power and then, the transmission cost is increased.

Summarizing, it may be seen that planetary roller transmissions wear out on their tractive surfaces which, over time, results in the loss of the tractive condition required for the rotation of the planetary rollers between the sun roller and the annular tractive track, so that it may be necessary to replace some pieces and to adjust the roller transmission. Furthermore, most of the planetary roller transmissions known include multiple separated pieces, making the size of the roller transmission not compact with respect to the pieces conforming it.

## SUMMARY OF THE INVENTION

In the light of the above, it has been looked for suppressing the disadvantages shown by the planetary roller transmissions of the previous art by developing a self-adjustable tractive planetary roller transmission comprising a conical sun roller having a base, a truncated face, and a tractive surface on its side wall; an annular tractive track having a conical surface concentrically separated from the sun roller; conical planetary rollers having a base; a truncated face and a tractive surface on its side wall, which are placed in a tilted fashion between the sun roller tractive surface and the annular tractive track, such that the tractive surface of each planetary roller is in contact with the sun roller tractive surface and the annular tractive track; the planetary rollers being equidistantly separated from each other around the sun roller and include a mounting shaft.

In the planetary roller transmission of the present invention, a planet carrier is provided wherein each planetary roller is rotatory mounted by its mounting shaft, in such manner that each planetary roller is separated from the planet carrier to rotate. Every planetary roller is further movably mounted in axial and radial directions in the planet carrier, in order for each planetary roller to adjust its axial and radial positions between the sun roller tractive surface and the annular tractive track as any of the roller transmission tractive surfaces wear out.

In addition, the roller transmission has an input shaft attached to the sun roller and lined up with respect to the roller transmission longitudinal axis; an output shaft attached to the planet carrier and lined up with respect to the input shaft; axial load means pressing the sun roller base; and a housing covering the roller transmission, wherein the input shaft is received and the output shaft protrudes.

As the roller transmission tractive surfaces wear out, namely, the sun roller tractive surface, the planetary roller tractive surface, or the annular tractive track, the axial load means exert a load on the sun roller which, due to the cone effect, exerts in turn a normal load on the planetary rollers which automatically adjust their axial and radial positions to remain pressed between the sun roller and the annular tractive track, achieving maintaining the tractive condition required to transmit power, in other words, the movement of the planetary rollers between the sun roller and the annular tractive track. In one aspect of the present invention, this same self-adjustable behavior of the planetary rollers may be achieved if the axial load is applied to the annular tractive track.

In a preferred manner, the roller transmission has an apex wherein the following lines converge: the roller transmission longitudinal axis line; the contact line existing between the sun roller tractive surface and the planetary roller tractive surface; the mounting shafts line; and the contact line existing between the planetary roller tractive surface and the annular tractive track. Depending how the planetary rollers are mounted on the planet carrier, the apex is located either on the input shaft or on the output shaft.

In a first embodiment of the present invention, each planetary roller moves on its mounting shaft to adjust its axial position while the radial adjustment is achieved by open radial channels in the planet carrier wherein the mounting shaft of each planetary roller is received and moved. Consequently, if the mounting shaft moves radially on the radial channel, the planetary roller also adjusts its position in the same direction.

In a second preferred embodiment of the present invention, each planetary roller along with its mounting shaft are integrally attached in one piece, and the planet carrier includes rotation bases fixed in axial direction freely receiving an end of every mounting axis, whereby each planetary roller can adjust its axial position in the planet carrier when its mounting shaft moves within the rotation base. Likewise to the first embodiment, the planet carrier includes open radial channels in order to achieve the radial adjustment of the planetary rollers wherein a rotation base is coupled so that every rotation base can move along the corresponding radial channel. Consequently, if the rotation base moves radially in the planet carrier, each planetary roller will also adjust its radial position since its mounting shaft is within said rotation base.

In a third preferred embodiment, the axial load means press the annular tractive track, which transmits the load as a normal load to the planetary rollers for these to adjust their radial and axial positions between the annular tractive track and the sun roller. In the third embodiment, each planetary roller is integrally attached to its mounting shaft in one piece and the mounting shaft ends extend over the base face and the planetary roller truncated face for the planetary roller to be mounted on the planet carrier by both ends of its mounting shaft, said planet carrier including rotation bases which receive in a free manner the mounting shaft ends. The planet carrier also includes open radial channels in order to allow the radial movement of the rotation bases and consequently the radial adjustment of the planetary roller.

It will be noticed that an object of the present invention is to provide a self-adjustable tractive planetary roller transmission having a compact size, but being highly efficient and having low noise levels during its operation, in addition to operate without using elasto-hidrodynamic fluids, even though it may optionally carry them inside its housing.

**BRIEF DESCRIPTION OF THE FIGURES**

The novel aspects considered to characterize the present invention will be established with more detail in the appended claims. However, due to both its organization and operation method, the invention itself, along with other objects and advantages thereof, will be better understood in the following detailed description of certain preferred embodiments, when read in connection to the appended drawings, wherein:

Figure 1 is a longitudinal cross-section view of a self-adjustable tractive planetary roller transmission constructed according to a first preferred embodiment of the present invention.

Figure 2 is a view of the upper half of the self-adjustable tractive planetary roller transmission of Figure 1, representing the apex wherein certain lines defined in the roller transmission converge.

Figure 3 is a side perspective view of the sun roller attached to the input shaft, which are part of the self-adjustable tractive planetary roller transmission of Figure 1.

Figure 4 is a rear perspective view of the planet carrier, showing the arrangement of the mounting shafts therein, said elements being part of the self-adjustable tractive planetary roller transmission illustrated in Figure 1.

Figure 5 is a longitudinal cross-section view of one mounting shaft used in the self-adjustable tractive planetary roller transmission of Figure 1.

Figure 6 is a front perspective view of the planet carrier with the planetary rollers mounted thereon, said elements being part of the self-adjustable tractive planetary roller transmission illustrated in Figure 1.

Figure 7 is a front top view of the planet carrier and planetary rollers illustrated in Figure 6.

Figure 8 is a rear perspective view of the planet carrier and planetary rollers shown in Figure 6.

Figure 9 is a front perspective view of a planetary roller used in the self-adjustable tractive planetary roller transmission illustrated in Figure 1.

Figure 10 is a top perspective view of a bearing being part of the axial load means used in the self-adjustable tractive planetary roller transmission of Figure 1.

Figure 11 is a side top view of an elastic washer being part of the axial load means used in the self-adjustable tractive planetary roller transmission of Figure 1 .

Figure 12 is a longitudinal cross-section view of a self-adjustable tractive planetary roller transmission constructed according to an alternative embodiment of the present invention.

Figure 13 is a longitudinal cross-section view of a self-adjustable tractive planetary roller transmission constructed according to a second preferred embodiment of the present invention.

Figure 14 is a view of the upper half of the self-adjustable tractive planetary roller transmission of Figure 13, representing the apex wherein certain lines defined in the roller transmission converge.

Figure 15 is a top and side perspective view of the sun roller attached to the input shaft, which are part of the self-adjustable tractive planetary roller transmission illustrated in Figure 13.

Figures 16 and 17 are side and top perspective views of a planetary roller with its mounting shaft used in the planetary roller transmission of Figure 13.

Figure 18 is a front perspective view of the planet carrier, wherein the planetary rollers are mounted on rotation bases, said elements being part of the self-adjustable tractive planetary roller transmission of Figure 13.

Figure 19 is a front perspective view of the planet carrier illustrated in Figure 18, including only its rotation bases.

Figure 20 is a front perspective view of the planet carrier illustrated in Figure 18, with no elements mounted thereon.

Figure 21 is a side and top perspective view of the output shafts of the self-adjustable tractive planetary roller transmission of Figure 13.

Figure 22 is a side and top perspective view of a rotation base.

Figure 23 is a longitudinal section view of a self-adjustable tractive planetary roller transmission constructed according to an additional embodiment of the present invention.

Figure 24 is a longitudinal cross-section perspective of a self-adjustable tractive planetary roller transmission constructed according to a third preferred embodiment of the present invention.

Figure 25 is a view of the upper half of the self-adjustable tractive planetary roller transmission of Figure 24, representing the apex wherein certain lines defined in the roller transmission converge.

Figure 26 is a top and side perspective view of the sun roller attached to the input shaft, which are part of the self-adjustable tractive planetary roller transmission of Figure 24.

Figure 27 is a side view of a planetary roller with its mounting shaft, used in the planetary roller transmission of Figure 24.

Figure 28 is a front perspective view of the planet carrier, wherein the planetary rollers are mounted on rotation bases, said elements being part of the self-adjustable tractive planetary roller transmission of Figure 24.

Figures 29 and 30 are top perspective views of the first disk being part of the planet carrier used in the planetary roller transmission of Figure 24.

Figures 31 and 32 are top perspective views of the second disk being part of the planet carrier used in the planetary roller transmission of Figure 24.

Figure 33 is a side perspective view of the housing rear cover and the annular tractive track used in the planetary roller transmission of Figure 24.

Figure 34 is a front perspective view of the housing rear cover of Figure 33.

Figure 35 is a rear perspective view of the annular tractive track illustrated in Figure 33.

Figure 36 is a side view of the axial load means which may be incorporated in the planetary roller transmission of Figure 24.

## DETAILED DESCRIPTION OF THE INVENTION

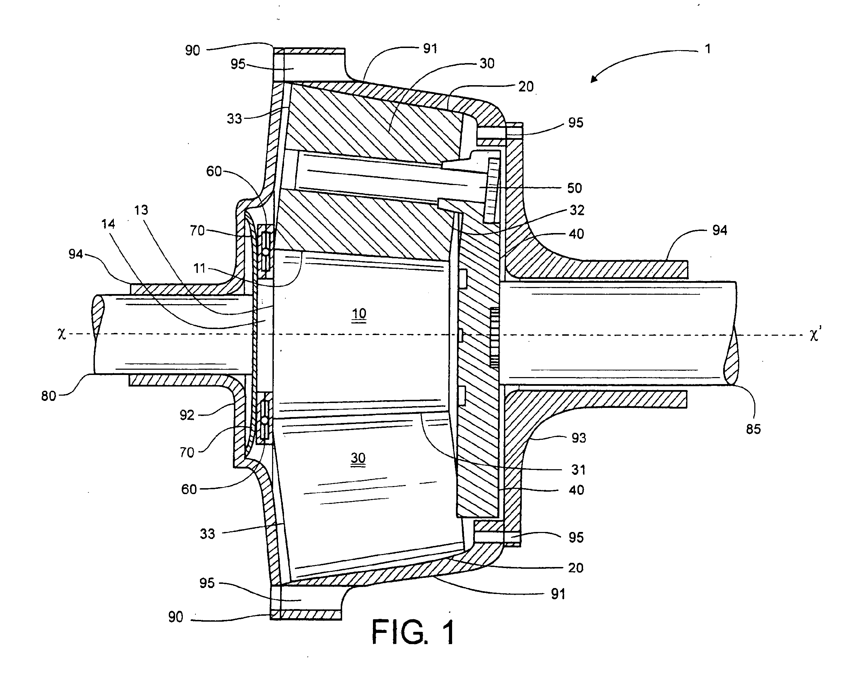

Referring to the appended drawings, and more specifically to Figure 1 wherein a longitudinal cross-section view of a self-adjustable tractive planetary roller transmission 1 is shown constructed according to a particularly preferred first embodiment of the present invention, which must be considered to be only illustrative and non limitative in nature. As it may be seen, said self-adjustable tractive planetary roller transmission 1 has a very compact structure, since there are few free spaces between the elements thereof.

The self-adjustable tractive planetary roller transmission 1 comprises: a conical sun roller 10 having a tractive surface 11 on its side wall; an annular tractive track 20 having a conical surface concentrically separated from the sun roller 10; conical planetary rollers 30 having a truncated face 32, a base 33, and a tractive surface 31 on its side wall. In this sense, it may be said that, due to the conical shape of the rollers, the base 33 is defined by the face having the largest diameter, while the truncated face 32 is the opposite face to the base 33, and the same applies for the sun roller faces10.

Planetary rollers 30 are placed in a tilted fashion between the tractive surface 11 of the sun roller 10 and the annular tractive track 20. They are also equidistantly separated from each other around the sun roller 10, so that the tractive surface 31 of each planetary roller 30 is in contact with the tractive surface 11 of the sun roller 10 and the annular tractive track 20. Furthermore, it may be said that every planetary roller 30 includes a mounting shaft 50.

Figure 1 aditionally shows a planet carrier 40, wherein planetary rollers 30 are rotatory mounted by its truncated face 32 by their mounting shaft 50, so that every planetary roller 30 remains away from the planet carrier 40 to be able to rotate. Furthermore, each planetary roller 30 remains movable mounted in axial and radial directions in the planet carrier 40, for every planetary roller 30 to adjust its axial and radial positions between the tractive surface 11 of the sun roller 10 and the annular tractive track 20. In the embodiment shown in Figure 1, planetary rollers adjust their axial position towards the planet carrier 40. The manner in which every planetary roller may adjust its axial and radial positions in this first embodiment will be detailed depicted later on.

As other important elements shown in Figure 1, it may be noticed that roller transmission 1 has an input shaft 80 attached to the sun roller 10 and lined up with respect to the longitudinal axis X-X' of the roller transmission 1. Furthermore, an output shaft 85 is seen attached to the planet carrier 40 and lined up with respect to the input shaft 80. Finally, Figure 1 shows the roller transmission having a housing 90 covering it, wherein the input shaft 80 is received and from which the output shaft 85 protrudes.

The self-adjustable tractive planetary roller transmission 1 is also provided with axial load means, such as the elastic washer 70, laying on the housing 90, preferably in its rear part, the washer 70 surrounding the input shaft 80. As a part of these axial load means, a bearing 60 in contact with the washer 70 is provided and mounted on a circumferential seat 14 formed next to the base 13 of the sun roller 10. Likewise, it may be seen that bearing 60 is in contact with base 33 of planetary rollers 30. The washer 70 continuously presses the bearing 60 to transmit an axial load to the sun roller 10 and, at the same time, the bearing 60 in contact with planetary rollers 30, reduces the relative angular speeds between the planetary rollers 30, the sun roller 10, and the elastic washer 70. From another point of view, the elastic washer 70 provokes a cone effect between the roller transmission components to keep the tractive condition required for the motion thereof and then, the power transmission is efficiently maintained.

As the tractive surface 11 of the sun roller 10, the tractive surface 31 of planetary rollers 30 or of the surface of the annular tractive track 20 wear out, the washer 70 exerts an axial load on the sun roller 10 which, due to the cone effect, exerts in turn a normal load on planetary rollers 30, making them to adjust their axial and radial positions to remained pressed upon again between the sun roller 10 and the annular tractive track 20.

Now, it is worth mentioning that, in the self-adjustable tractive planetary roller transmission 1 illustrated in Figure 1, the annular tractive track 20 is integrally formed inside the housing 90. Due to this feature, the roller transmission has a compact size. The housing 90 includes preferably three sections, namely: i) a middle section 91, having a longitudinal section conical shape with an open front face and an open rear face; ii) a rear cover 92 attached to the rear face of middle section 91 which receives the input shaft 80; and iii) a front cover 93 attached to the front face of the middle section 91 from which the output shaft 85 of the housing 90 protrudes.

In housing 90, the front cover 93 and the rear cover 92 are attached to the middle section 91 by means of bolts, screws, rivets (which are not shown in the figures), or, other means for said purpose which pass through matching holes 95 provided in the middle section 91, the front cover 93, and the rear cover 92.

Preferably, the rear cover 92 and the front cover 93 include hollow axial extensions 94 having cylindrical shape protruding from housing 90, to receive and to take the input shaft 80 inside the housing 90 and to take the output shaft 85 outside the same.

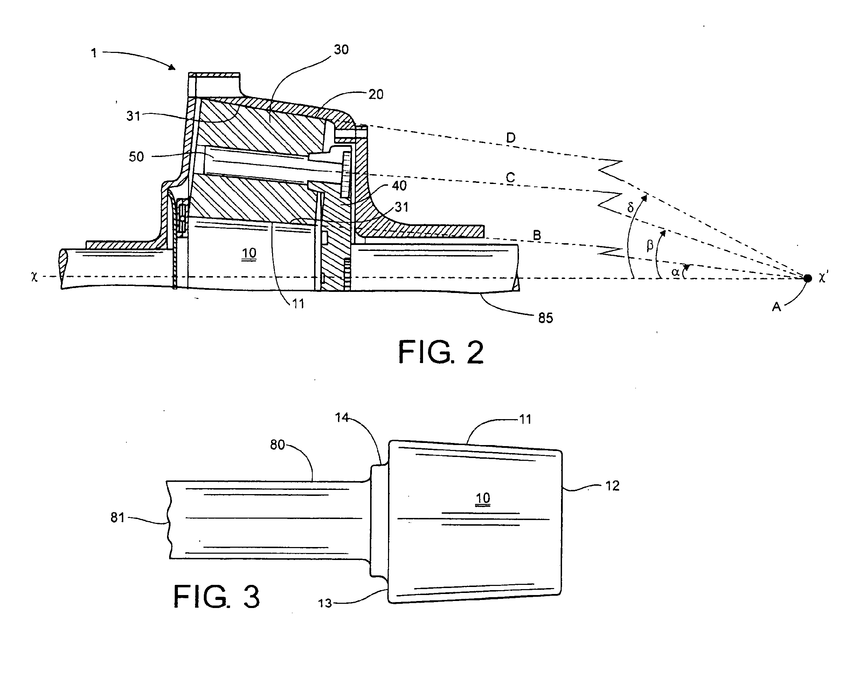

Referring now to Figure 2 showing the upper half of a longitudinal cross-section of the self-adjustable tractive planetary roller transmission 1, it may be seen that on its longitudinal axis X-X' and on the side of the output shaft 85, it has an intersection point A or "apex" wherein the following lines defined in the transmission 1 converge:

a) a first contact line B existing between the tractive surface 11 of the sun roller 10 and the tractive surface 31 of each planetary roller 30, the first contact line B defining with the longitudinal axis X-X' of the transmission, a first angle of inclination $\alpha$;
b) the line C of the longitudinal axis of the mounting shafts 50, with the longitudinal axis of the transmission X-X', this line C defines a second angle of inclination $\beta$; and
c) a second contact line D existing between the tractive surface 31 of the planetary rollers 30 and the annular tractive track 20, with the longitudinal axis X-X' of the transmission, the second contact line D defines a third angle of inclination $\delta$; In particular, in order to ensure the pure bearing condition and the minimum loss of efficiency in the self-adjustable tractive planetary roller transmission 1, the angles of inclination defined above relate to one another according to the following formula:

$$\beta = 0.5 \, (\alpha + \delta) \qquad\qquad (I)$$

The pure rolling condition is achieved having the same tangential speed in all the contact points of the planetary rollers 30 tractive surface 31 with the the sun roller 10 tractive surface 11, and also when the same speed is present between the contact points of the planetary rollers 30 tractive surface 31 and the annular tractive track 20, in other words, the pure rolling condition is understand as the absence of slippery zones in the tractive surfaces of the transmission 1.

In the first preferred embodiment of the present invention is very important to consider that having planetary rollers 30 moving in radial and axial directions allows ensuring the maintenance of apex A and the relationship between angles $\alpha$, $\beta$, and $\delta$ according to formula (I), when the tractive surfaces of the self-adjustable tractive planetary roller transmission 1 wear out.

To describe in a detailed manner other elements of the first preferred embodiment of the present invention, it is make particular reference to Figure 3, showing a side view of the sun roller 10 integrally attached to the input shaft 80 forming one piece. Outside the housing, the outer end 81 of the input shaft is connected to a power source (which is not shown in the figures), such as an electric motor. Likewise, in Figure 3, it can be seen that the sun roller 10 has its tractive surface 11, a truncated face 12 and a base 13, wherein the circumferential seat 14 is provided to mount on the above mentioned bearing 60. The circumferential seat has a smaller diameter than the diameter of the base 13 of the sun roller 10.

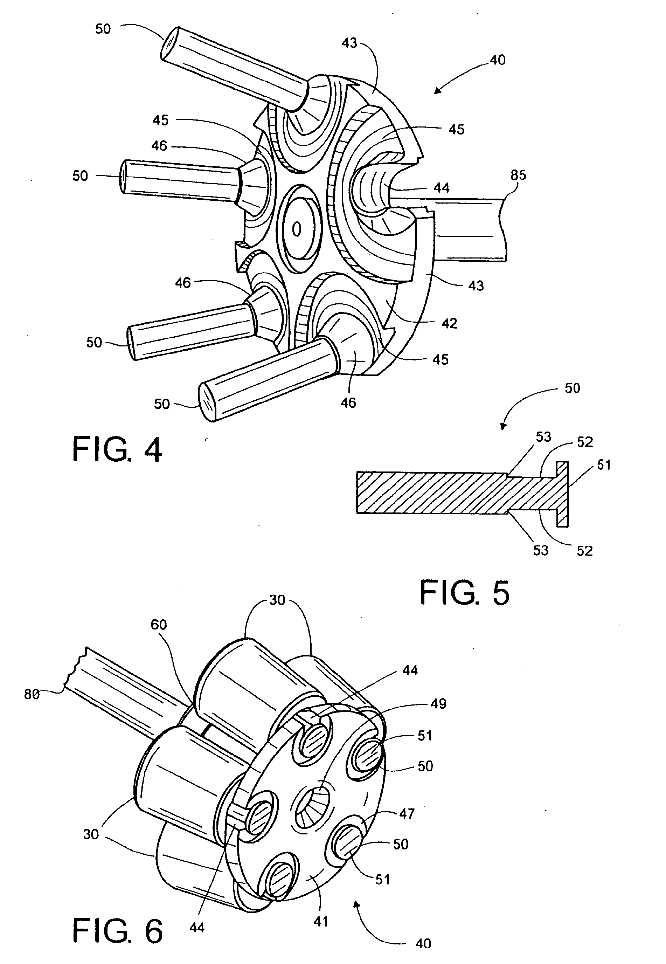

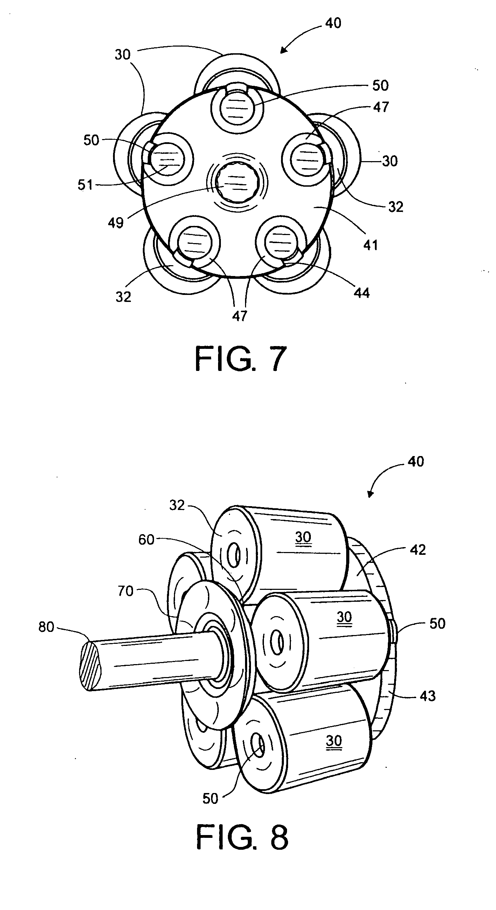

Figures 4, and 6 to 8, refer to different views of the planet carrier 40, with the planetary rollers 30 mounted thereon, except for Figure 4, showing a rear perspective view of the planet carrier 40 with only the mounting shafts 50 placed therein, with no planetary rollers. In these same figures, except for figure 7, the output shaft 85 is shown attached to the planet carrier 40.

The mounting shaft 50 of each planetary roller 30 is freely received within the same, and each planetary roller 30 can move on its shaft 50 to adjust its axial position in the transmission.

On the other hand, the planet carrier 40 is a disk having an outer face 41, an inner face 42, and a side face 43. The inner face 42 is located in front of the planetary rollers. Open radial channels 44 are provided on the side face 43 of the planet carrier 40 crossing from side to side the thickness of the planet carrier 40, each radial channel receiving an end of the mounting shaft 50 of each planetary roller 30. Every open radial channel 40 allows the radial movement along itself of a mounting shaft 50 and consequently, each planetary roller can adjust its radial position in the planet carrier 40. In a specific embodiment of the present invention, the relationship between the radial length of the open radial channels 44 and the diameter of the mounting shafts 50 is from about 1.0 to about 1.2.

Another important aspect of the planet carrier 40 is that shaft guides 46, associated with every open radial channel 44, are provided on its inner face 42 and around said open radial channels 44, each of said guides 46 help the mounting shafts 50 to maintain the titled position of the planetary rollers 30 in the planet carrier 40. Preferably, said shaft guides 46 are hollow protrusions having a truncated cone shaped wall, extending upwards in a tilted manner from the inner face 42 of the planet carrier 40 over the edge of every open radial channel 44.

Referring now particularly to Figures 4, 5, and 7, it can be mentioned that each mounting shaft 50 includes at one end a head 51 and a longitudinal coupling section 52 next to the head having a smaller diameter than the diameter of the mounting shaft 50; the head being coupled in a recess 47 formed in the outer face 41 of the planet carrier 40, and around the edge of each radial channel 44, while the longitudinal coupling section 52 extends from the head 51 and being long enough to be received inside every open radial channel 44 and its respective shaft guide 46. Both the radial channel 44 and its shaft guide 46 have a smaller inner diameter than the diameter of the mounting shaft 50, but larger than the diameter of the coupling section 52. The mounting shaft 50 additionally has a radial wall 53 delimiting the longitudinal coupling section 52, with which the head 51 and said radial wall 53 keep the mounting shaft 50 fixed in axial direction within the planet carrier 40. The important feature in this first embodiment is that each mounting shaft 50 moves only in radial direction to allow every planetary roller 30 to move in the same direction, while to adjust its axial position, every planetary roller 30 moves along its mounting shaft 50.

Referring now particularly to Figure 4, it can be seen that the rear face 42 of the planet carrier 40 is provided with adjustment spaces or vents 45 to prevent contact of the planet carrier 40 with the planetary rollers truncated face when it adjusts its radial and axial positions in the transmission. Preferably, the adjustment spaces or vents 45 are recesses having circular perimeter and a tilted surface with respect to the inner face surface 42, said recesses having a maximum depth in the side face 43 of the planet carrier 40.

On the other hand, the planet carrier 40 includes a toothed circular recess 49 (see Figures 6 and 7) for the attachment of the output shaft 85 by its inner end being also toothed. The attachment of these elements can be clearly appreciated in Figure 1. For the attachment of the output shaft 85 with the planet carrier 40, other means may also used, e.g. male-female connections provided in the planet carrier 40 and in the inner end of the output shaft 85.

Regarding planetary rollers 30, the amount thereof will depend on the durability and power transmission relationship requirements and, more particularly, in the planetary roller transmission of the present invention it is preferred to use from 3 to 12 planetary rollers. When less than 3 rollers are used, the transmission durability is dramatically reduced, and when the amount is bigger than 12, there are room problems to place the rollers and other elements of the transmission, furthermore, the power transmission relationship is not appropriate for almost all industrial applications. More preferably, as illustrated in Figures 1 to 11 of the first preferred embodiment of the present invention, the transmission includes 5 planetary rollers, which allow the transmission of the present invention to be properly efficient and to have excellent power relationship.

With respect to the manufacturing materials of the tractive planetary roller transmission of the present invention, it can be said that the sun roller 10, the annular tractive track 20, and planetary rollers 30 are fully manufactured from metalic, polymeric, or ceramic materials meeting the following specifications: static friction coefficient over 0.3 and surface hardness over than Shore A-90. More preferably, said transmission parts are made of steel, nylon including fiberglass or rubber fillers and/or acetal polymers having said tractive coefficient and hardness properties.

In another embodiment of the present invention not shown in the appended figures, the sun roller and the planetary rollers comprise a core and a lining forming its tractive surfaces. This embodiment pretends the core to have a high structural rigidity with a dynamic friction coefficient under 0.1 and a hardness higher than the tractive surfaces, so that the core may be manufactured using metalic, ceramic, and/or polymeric materials, while the lining is manufactured from the materials mentioned in the embodiment wherein the planetary rollers and the sun roller are fully made of one material, in other words, the lining is preferably made of steel, nylon, with fiberglass or rubber loads and/or acetal polymers, these materials having a static friction coefficient over 0.3 and a surface hardness over Shore A-90.

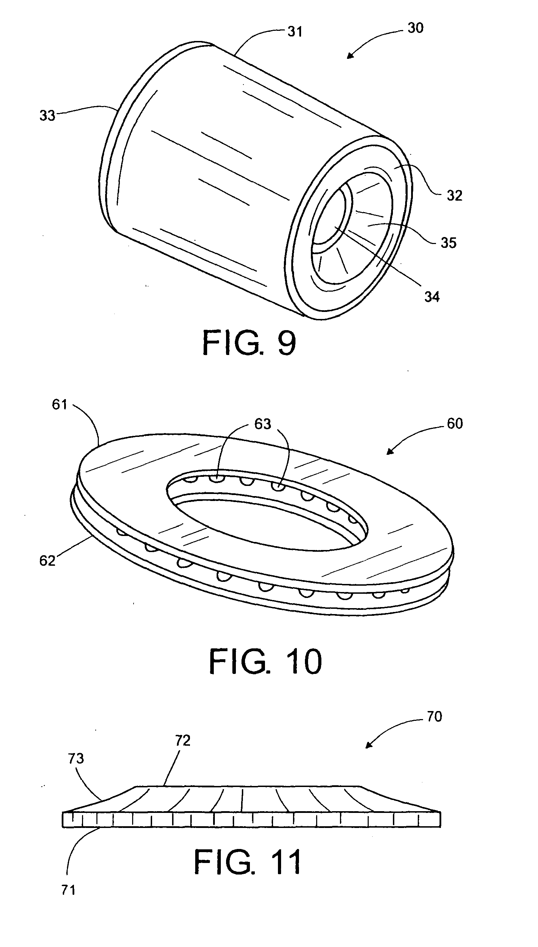

Referring to Figure 9, it shows a front perspective view of a planetary roller 30 used in the tractive planetary roller transmission of Figure 1. As said before, every planetary roller 30 has a tractive surface 31 on its side wall, a truncated face 32, and a base 33. Likewise, this figure shows planetary roller having also a longitudinal conduit 34 on its center to receive freely the mounting shaft, as well as a tilted wall 35 to connect the truncated face 32 with the longitudinal conduit 34, said tilted wall 35 having an inclination and size similar to the outer wall of the shaft guides 46 shown in Figure 4 to faccilitate the rotation of the planetary roller 30.

Reference now to Figure 10 is made to depict the bearing 60 being part of the axial load means in the transmission of this first embodiment. The bearing 60 is preferably selected from a cylinder bearing, a ball bearing, or a cone bearing, as illustrated in Figure 10. The bearing being used is a cylinder bearing comprised by two covers 61 and 62 with a plurality of cylinders 63 therebetween. This kind of bearing allows exerting an axial load on the sun roller and, at the same time, to reduce the relative speeds between the planetary rollers, the sun roller, and the elastic washer, but without preventing the rotatory movement thereof.

Finally, Figure 11 shows the elastic washer 70, which is also part of the axial load means of the transmission, the washer having a flat base 71, a top face 72 having a smaller diameter than the flat base, and a curved perimeter wall 73 which goes upwards from the flat base 71 up to the top face 72. Although the conformation of the axial load means is simple for this embodiment, the features of the washer 70 allow exerting a continuous load on the bearing 60, and as the tractive surfaces 11, 31, and 20 of the transmission wear out, to achieve the adjustment of the planetary rollers.

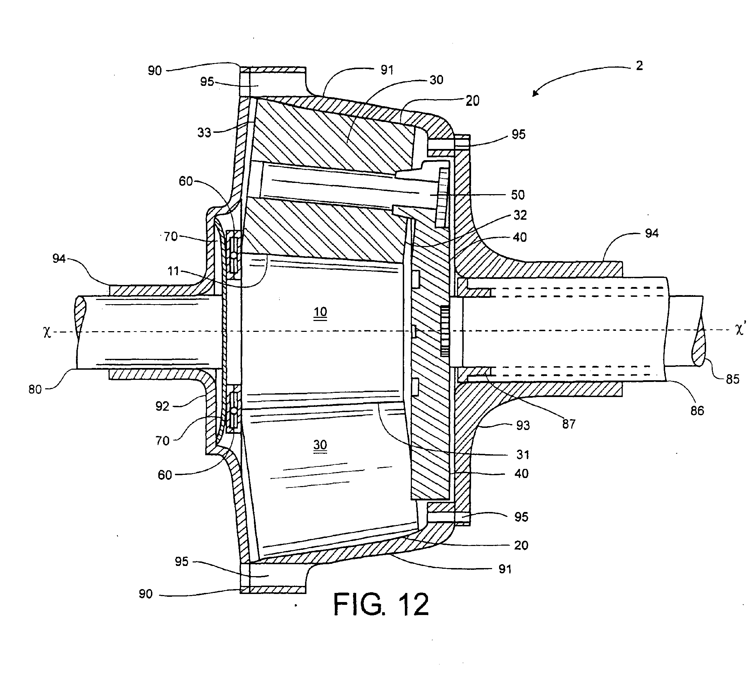

On the other hand; Figure 12 shows a self-adjustable tractive planetary roller transmission 2 constructed according to an alternative embodiment of the present invention, similar to the embodiment of Figures 1 to 11 and maintaining the same numerical references. However, in the roller transmission 2 of Figure 12, the output shaft 85 is covered by a shaft housing 86, a bushing 87 is provided between said shaft housing 86 and the output shaft 85. Both the housing and the bushing 87 are arranged inside the axial extension 94 of the front cover 93 of housing 90. With this arrangement, a proper power control and handling in the input shaft 85 is possible. The remaining elements of the roller transmission of Figure 12 are the same than those described for the roller transmission of Figure 1.

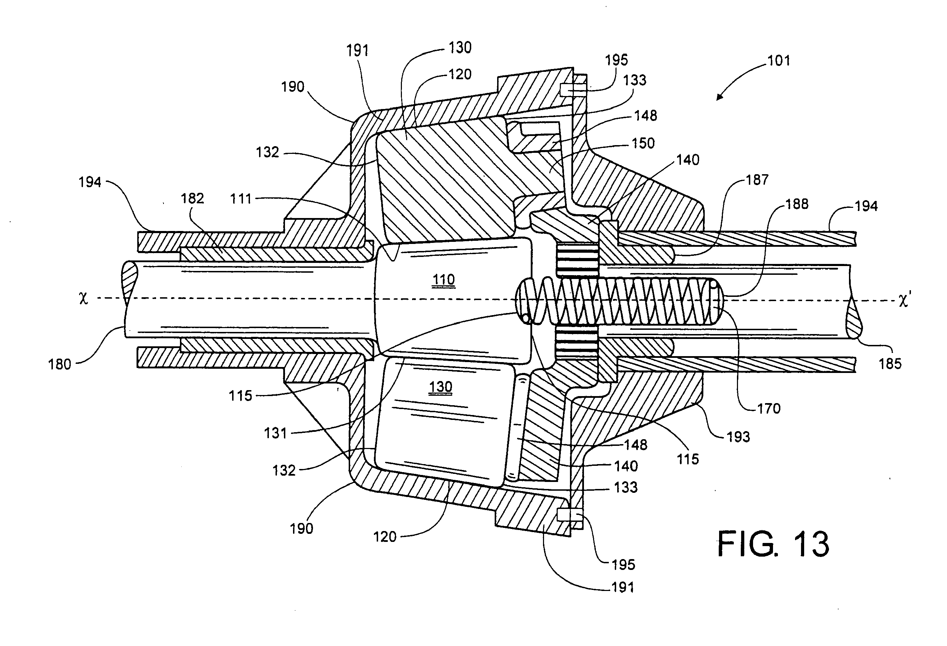

A second preferred embodiment of the present invention will be now described as illustrated in Figures 13 to 22. In this second embodiment, a numerical prefix "1" is added to those numerical references used to identify the main elements of the first embodiment illustrated in Figures 1 to 11.

Figure 13 shows a longitudinal cross-section view of a self-adjustable tractive planetary roller transmission 101 constructed according to the second particularly preferred embodiment of the present invention. As seen, the apex in the roller transmission 101 is found on the opposite side with respect to the one having the roller transmission 1 of the first embodiment. However, it will be appreciated that both embodiments operate under the general principles of the present invention, mainly the adjustment in the radial and axial positions of the planetary rollers between the sun roller and the annular tractive track.

More specifically, the self-adjustable tractive planetary roller transmission 101 illustrated en Figure 13 comprises: a conical sun roller 110 having a tractive surface 111 on its side wall; an annular tractive track 120 having a conical surface concentrically separated from the sun roller 110; conical planetary rollers 130 having a truncated face 132, a base 133, and a tractive surface 131 on its side wall, all placed in a tilted manner between the tractive surface 111 of the sun roller 110 and the annular tractive track 120, making the tractive surface 131 of each planetary roller 130 to be in contact with both the tractive surface 111 of the sun roller 110 and the annular tractive track 120. Planetary rollers 130 are equidistantly separated from each other around the sun roller 110 and include a mounting shaft 150.

In this second embodiment, each planetary roller 130 with its mounting shaft 150 are integrally attached in one piece. Likewise, each planetary roller 130 is rotatory mounted on its base face 133 by its mounting shaft 150, making every planetary roller 130 to be separated from the planet carrier 140 to rotate.

Figure 13 also shows a planet carrier 140 including rotation bases 148. In every of said rotation bases 148, the mounting shaft 150 of each planetary roller 130 is freely received, making every planetary roller 130 to rotate and to adjust its axial position in the planet carrier 140, since the mounting shaft 150 moves inside the rotation base 148. The radial adjustment of planetary rollers 130 is explained below.

In the planet carrier 140, each rotation base 148 cannot move in axial direction, but can freely move in radial direction, making each rotation base 148 to allow in turn the radial position adjustment of every planetary roller 130, along with its mounting shaft 150, between the tractive surface 111 of the sun roller 110 and the annular tractive track 120.

As said before, the planetary rollers 130 are mounted on their base face 133 in the planet carrier 140 making the rollers to get away from the planet carrier 140 when the planetary rollers 130 adjust their axial position inside roller transmission 101.

Furthermore, the self-adjustable tractive planetary roller transmission 101 comprises axial load means corresponding in this second embodiment to the helical spring 170, which presses on the base 113 of the sun roller 110 in axial direction and in opposite direction from the planet carrier 140.

Still referring to Figure 13, it may be noticed that the roller transmission 101 has an input shaft 180 attached to the sun roller 110 and lined up with respect to the longitudinal axis X-X' of the planetary roller transmission 101. Furthermore, an output shaft 135 attached to the planet carrier 140 and lined up with respect to the input shaft 180 is seen.

In particular, helical spring 170 is placed between the sun roller 110 and the output shaft 185. More specifically, from Figure 13 is seen a portion of the helical spring 170 housed inside a cavity 188 included in the inner end of the output shaft 185, while the rest of the helical spring 170 protrudes from the cavity 188 to make contact and be supported by a depression 115 included in the sun roller 110.

Figure 13 also shows that the roller transmission 101 has a housing 190 surrounding it to receive the input shaft 180 and from which the output shaft 185 protrudes.

In roller the transmission 101, the helical spring 170 exerts an axial load on the sun roller 110 which reacts and exerts in turn pressure on the planetary rollers 130 against the annular tractive track 120. It is important bearing in mind that the planetary rollers 130 are able to adjust their radial and axial positions between the tractive surface 11.1 of the sun roller 110 and the annular tractive track 120. Consequently, it is possible to maintain the tractive condition required for the movement of the self-adjustable tractive planetary roller transmission 101 as the tractive surface 111 of the sun roller 110, the tractive surface 131 of the planetary rollers 130, and the surface of the annular tractive track 120 wear out.

Now then, the annular tractive track T20 is integrally formed inside the housing 190 in order to reduce the size of the roller transmission. Said housing 190 in this second embodiment is preferably formed by two sections, namely: i) a conical shaped main section 191 having a longitudinal section with an open front face; and ii) a front cover 193 attached to the front face of the main section 191 and from which the output shaft 185 of the housing 190 protrudes.

In housing 190, the front cover 193 is attached to the main section 191 by means of bolts, screws, rivets, or other similar means passing through matching holes 195 provided both in the main section 191 and in the front cover 193.

Preferably, a pair of hollow axial extensions 194 having cylindrical shape, are included in the housing 190. One of said extensions receives and takes the input shaft 180 into the housing 190, while the other axial extension 194 takes the output shaft 185 towards the outer part of the housing 190.

This same Figure 13 shows the roller transmission 101 including a first bushing 182 placed between the input shaft 180 and the axial extension 194, wherein the input shaft 180 is received. Said first bushing 182 lines up and facilitates the rotation of the input shaft 180 when the planetary roller transmission 101 is moving. Similarly, a second bushing 187 is included and placed between the output shaft 185 and the axial extension 194 from which the output shaft 185 protrudes. This second bushing 184 lines up and faccilitates in turn the rotation of the output shaft 185.

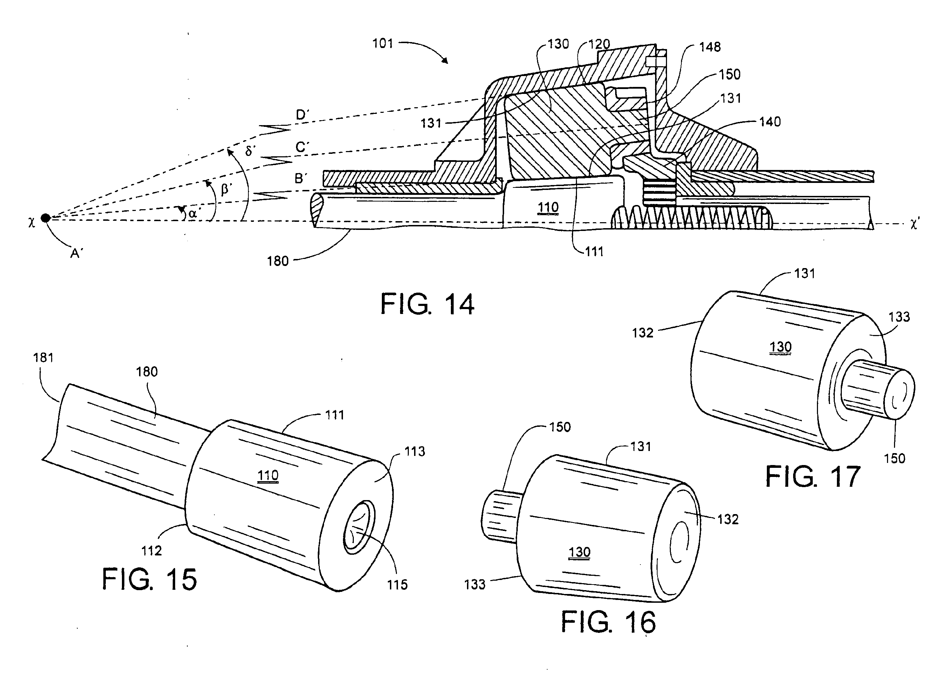

Referring now to Figure 14 showing the upper half of a longitudinal cross-section of the auto-adjustable tractive planetary roller transmission 101 having on its longitudinal axis X-X' and at the input shaft 180 side an intersection point A' or "apex" wherein the following lines defined in the transmission 101 converge:

a) a first contact line B' existing between the tractive surface 111 of the sun roller 110 and the tractive surface 131 of each planetary roller 130, the first contact line B' along with the longitudinal axis X-X' of the transmission defining a first angle of inclination $\alpha$';
b) the line C' of the longitudinal axis of the mounting shafts 150. This line C' along with the longitudinal axis X-X' of the transmission defines a second angle of inclination $\beta$';
c) and a second contact line D' existing between the tractive surface 131 of planetary rollers 130 and the annular tractive track 120, the second line of contact D' along with the longitudinal axis X-X' of the transmission defining a third angle of inclination $\delta$'.

Based on the above mentioned for the first embodiment, to ensure the pure rolling condition and the minimum loss of efficiency in the self-adjustable tractive planetary roller transmission 101, the angles of inclination previously defined are related according to the following formula:

$$\beta' = 0.5 \, (\alpha' + \delta') \qquad \text{(IA)}$$

In the second preferred embodiment of the present invention it is very important to have planetary rollers 130 whose mounting shafts 150 may axially move on the rotation bases 148, which are in turn free to move in a radial direction in the planet carrier 140, since this allows to ensure keeping apex A' as well as to maintain the relationship between angles $\alpha$', $\beta$', and $\delta$' according to the formula (IA) when the tractive surfaces of the self-adjustable tractive planetary roller transmission 101 wear out.

That planetary rollers are free to adjust their position is an essencial matter in this invention. For instance, in the embodiment of Figure 1, this is achieved when every planetary roller 30 axially slides around its shaft 50 being able to move in a radial direction in the planet carrier 40, consequently moving the planetary roller 30 in the same direction. Meanwhile, in the second preferred embodiment of Figure 13, every planetary roller 130 moves since its mounting shaft 150 is received in a rotation base 148 and the shaft may be axially and rotatory moved inside said rotation base 148 which, on the other hand, can move in radial direction in the planet carrier 140.

In order to depict with more detail other elements being part of the second preferred embodiment of the present invention, reference is made to Figure 15, which shows a side and top perspective view of the sun roller 110 attached to the input shaft 180. Outside the housing, the outer end 181 of the input shaft is connected to a power source (which is not shown in the figures), such as an electric motor.

Likewise, Figure 15. shows that the sun roller 110, besides having the tractive surface 111, is defined by a truncated face 112 and a base 113. This face of the sun roller is provided with the depression 115, wherein the helical spring 170 is supported (see Figure 13), whereby it is possible to exert an axial load on the sun roller 110. Another important issue for this second embodiment, is that the sun roller 110 is integrally attached to the input shaft 180, having de advantage of reducing the number of pieces used to assemble the roller transmission.

On the other hand, Figures 16 and 17 show perspective views of a planetary roller 130, from its truncated face 132 and from its base 133, respectively. In addition to the tractive surface 131, these figures show the mounting shaft 150 integrally attached to the planetary roller 130 forming one piece, representing an advantage for the roller transmission assembly, in other words, there are less number of pieces in the roller transmission.

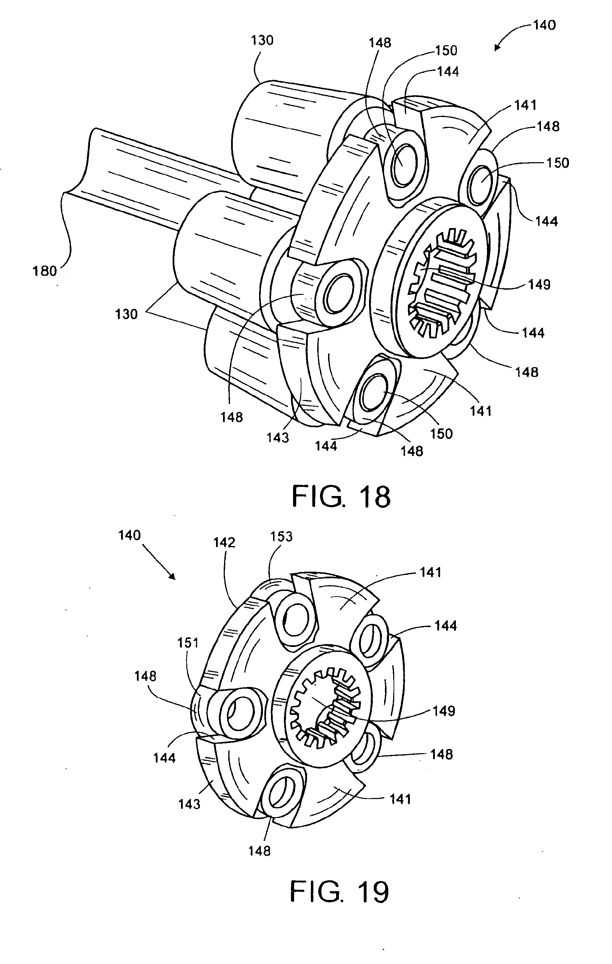

Referring now to Figures 18, 19, and 20, showing different views of the planet carrier 140, wherein other important elements of the roller transmission 101 are mounted, such as the input shaft 180, planetary rollers 130 with their mounting shafts 150 (Figure 18), and rotation bases 148 (Figures 18 and 19).

The planet carrier 140 is a disk having an outer face 141, an inner face 142, and a side face 143. !n particular, the planet carrier 140 is provided on its side face 143 with open radial channels 144 crossing from side to side the thickness thereof. A rotation base 148 is coupled on each one of said radial channels 144.. As it has been mentioned before, a mounting shaft 150 is received on every rotation base 148 from one of the planetary rollers 130. Through the length of these open radial channels 144, each rotation base can move radially, whereby the planetary rollers 130 adjust their radial position in the roller transmission.

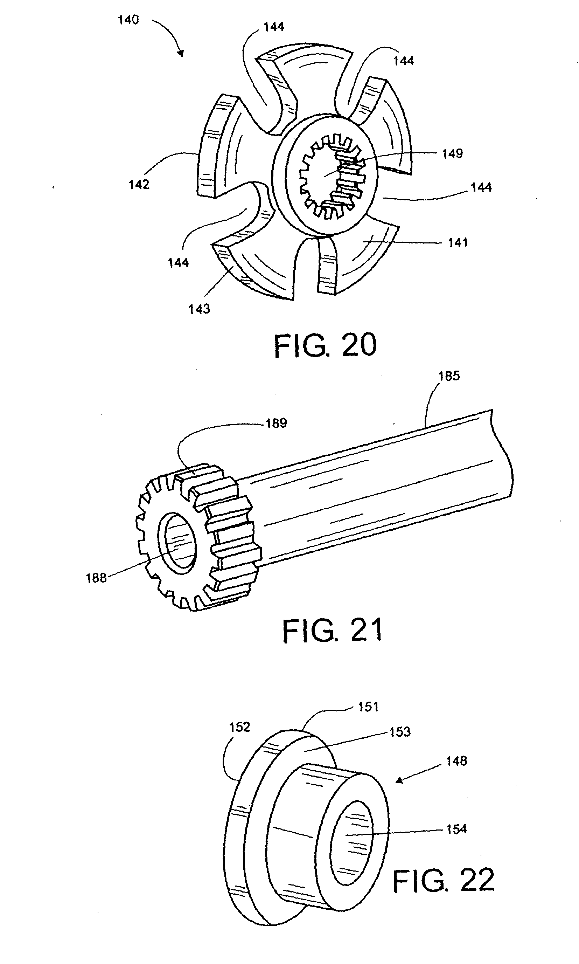

Another important feature of the planet carrier 140 especially noticed in Figures 19 and 20, is that it has a circular crowned cut 149 on its center. The inner end of the output shaft 185, which is also crowned, is coupled in said cut. For instance, in Figure 21, the output shaft 185 has a gear 189 on its inner end. Other means for the attachment of the output shaft 185 to the planet carrier 140 may be used, such as male-female connections provided in the planet carrier 140 and at the inner end of the output shaft 185. Figure 21 shows the cavity 188 wherein a portion of the helical spring 170 is housed operating as the axial load means pushing the sun roller (see Figure 13).

Regarding Figure 22, showing a perspective view of a rotation base 148 described in the second embodiment as bushing shaped having a head 151 with a front face 153 in contact with the inner face of the planet carrier and a rear face 152 in contact with the base face of the corresponding planetary roller. The head 151 has a larger diameter than the width of every radial channel of the planet carrier. In this manner, the movement in axial direction of the rotation base 148 in the planet carrier is prevented.

An important point to be remarked is that it is important to reduce the different angular speeds of the planetary rollers and of the planet carrier when the planetary roller transmission is moving. In this second embodiment of the present invention, said reduction is achieved by means of rotations bases 148 and, in particular, by means of the bushing head 151, which is in contact with both the planet carrier 140 and the planetary rollers 130.

Returning to Figure 22, bushing 148 shows a longitudinal conduit 154 wherein the mounting shaft 150 is received, allowing the axial and rotational movement of the planetary roller 130. Moreover, a bearing may be included in the longitudinal conduit 154 to facilitate even more the rotational movement of the mounting shaft 150.

In the second preferred embodiment being depicted, the roller transmission has 5 planetary rollers. However, it is possible to include from 3 to 12 planetary rollers. When using less than 3 rollers, the roller transmission durability is dramatically reduced, while when using more than 12 rollers, there are room problems to place the rollers and other elements of the roller transmission. Furthermore, in this latter case, the relationship of the power roller transmission is not appropriate for almost all industrial applications such as appliances (washing machines) or even motorcycles.

In this second embodiment, the sun roller 110, the annular tractive track 120, and the rotation bases 148 are fully manufactured from metalic, polymeric, or ceramic materials meeting the following specifications: Static friction coefficient over 0.3 for the sun roller 110, annular tractive track 120, and planetary rollers 130, as well as a dynamic friction coefficient under 0.1 for the rotation base 148, while the hardness for all of these elements is higher than Shore A-90. More preferably, said parts of the roller transmission are manufactured from steel, nylon having fiberglass or rubber fillers, and/or acetal polymers having said tractive coefficient and hardness properties.

In the second embodiment of the present invention, the sun roller 110 and planetary rollers 130 may also be formed by a core and a lining forming its tractive surfaces. In this embodiment, the core is pretended to exhibit a high structural rigidity, a dynamic friction coefficient under 0.1, and a hardness higher than the tractive surfaces, so that the core may be made of metalic, ceramic, and/or polymeric materials, while the lining is manufactured from the materials mentioned in the embodiment in which planetary rollers 130 and the sun roller 110 are fully made of one material, that is, the lining is preferably made of steel, nylon having fiberglass or rubber fillers, and/or acetal polymers, these materials for the lining having a static friction coefficient over 0.3 and a surface hardness higher than Shore A-90.

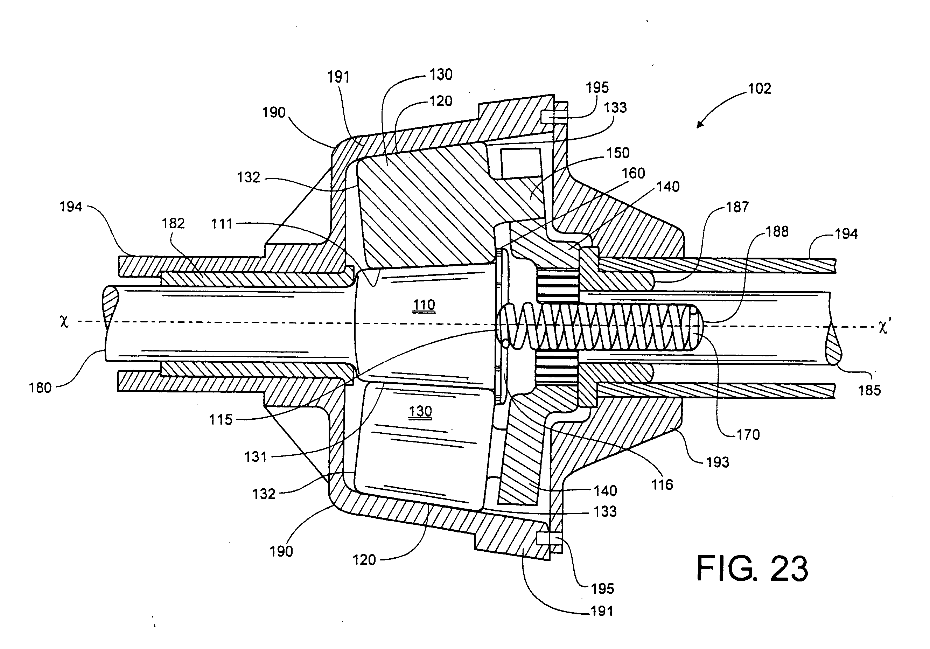

Referring now to Figure 23, it shows a self-adjustable tractive planetary roller transmission 102 constructed according to an additional embodiment of the present invention. As seen, the elements in this third embodiment are basically the same than those shown for the roller transmission of Figure 13, being the reason why the same numerical references are maintained. The roller transmission 102 of this third embodiment does not include the rotation bases 148 of the roller transmission of Figure 13, thereby reducing the piece number. However, it may be noticed a special similitud with the roller transmission of the first embodiment of Figure 1, particularly because it includes a flat washer 160 having the same function as the bearing 60 of roller transmission 1 of Figure 1. More specifically, the flat washer 160 is placed on the sun roller 110 and around a shoulder 116 integrally formed around the base face 113. As for the roller transmission of the first embodiment (Figure 1), the function of the flat washer 160 is to reduce the relative angular speed between the sun roller 110 and planetary rollers 130, preventing thus a frictional resistive force to achieve the tractive condition required for the power roller transmission. The remaining elements appearing in Figure 23 are the same that have been depicted according to Figure 13.

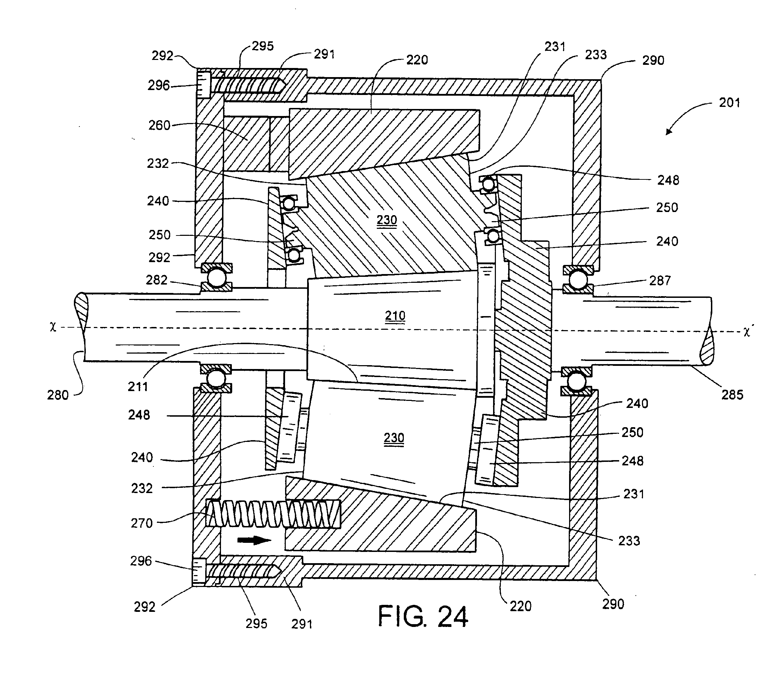

Following it will be described a third preferred embodiment of the present invention which is illustrated in Figures 24 to 35. In this third embodiment, the numerical prefix "2" has been added to the numerical references to identify the main elements of both the first and second embodiments.

Figure 24 shows a longitudinal section of a self-adjustable tractive planetary roller transmission 201. Again, in this third embodiment is important to adjust the radial and axial positions of the planetary rollers 230 between the sun roller 210 and the annular tractive track 220. However, the axial load is now exerted on the annular tractive track 220 which, due to the cone effect, exerts a normal load on the planetary rollers 230, for these to remain pressed between the sun roller 210 and the annular tractive track 220 as the roller transmission tractive surfaces wear out.

More specifically, the self-adjustable tractive planetary roller transmission 201 illustrated in Figure 24 comprises: A conical sun roller 210 having a tractive surface 211. at its side wall; an annular tractive track 220 having a conical surface concentrically separated from the sun roller 210; conical planetary rollers 230 having a truncated face 232, a base 233, and a tractive surface 231 on its side wall, all placed in a tilted manner between the tractive surface 211 of the sun roller 210 and the annular tractive track 220, so that the tractive surface 231 of every planetary roller 230 is in contact with both the tractive surface 211 of the sun roller 210 and the annular tractive track 220. Planetary rollers 230 are equidistantly separated to each other around the sun roller 210 and include a mounting shaft 250.

In this third embodiment, each planetary roller 230 with its mounting shaft 250 is integrally attached in one piece. Also, on Figure 24 is noted that both ends of the mounting shaft 250 extend on the base face 233 and the truncated face 232 of the planetary roller 230, so each planetary roller 230 is mounted by both ends of its mounting shaft 250 to a planet carrier 240, remaining separated therefrom to rotate.

For this assembly, the planet carrier 240 includes rotation bases 248 each freely receiving a mounting shaft 250 end of every planetary roller 230. In this manner every planetary roller 230 in the planet carrier 240 can rotate and adjust its axial position, since the mounting shaft 250 can move inside the rotation bases 248. The radial adjustment of planetary rollers 230 will be explained below.

In the planet carrier 240, every rotation base 248 is free to move in radial direction and allows to every planetary roller 230 with its mounting shaft 250 to adjust its radial position between the tractive surface 211 of the sun roller 210 and the annular tractive track 220. The particular conformation of the planet carrier 240 for this third embodiment will be described later.

Furthermore, the self-adjustable tractive planetary roller transmission 201 of Figure 24 comprises axial load means which, in this third embodiment, are a plurality of helical springs 270 and a cam 260 exerting an axial load on the annular tractive track 220.

Referring still to Figure 24, it may be seen that roller transmission 201 has an input shaft 280 attached to the sun roller 210 and lined up with respect to the longitudinal axis X-X' of the planetary roller transmission 201. Furthermore, an output shaft 285 is attached to the planet carrier 240 and lined up with respect to the input shaft 280.

In Figure 24, it is also seen the roller transmission 201 having a housing 290 covering it, receiving the input shaft 280 and from which the output shaft 285 protrudes. Unlike the first and second embodiments, the annular tractive track 220 is independent from housing 290 since, as it was mentioned before, the axial load is exerted now on the annular tractive track 220.

In particular, housing 290 for this third embodiment is conformed by two sections, namely: i) a main section 291 having a cylindrical shape with a longitudinal section having an open rear face; and ii) a rear cover 292 attached to the main section 291. Said rear cover 292 receives the input shaft 280. In the housing 290, the rear cover 292 is attached to the main section 291 by the screws 296 passing through the matching holes 295 provided in the main section 291, as well as in the rear cover 292. It is possible to use rivets, bolts, or similar means to attach these parts of the housing 290.

As it may be seen in Figure 24, housing 290 includes an input bearing 282 coupled in the central part of the rear cover 292. The input shaft 280 is received whithin this bearing. Similarly, an output bearing 287 is included for the output shaft 285. Bearings 282 and 287 center, line up, and facilitates the rotation of both the input shaft 280 and the output shaft 285 when the planetary roller transmission 201 is moving.

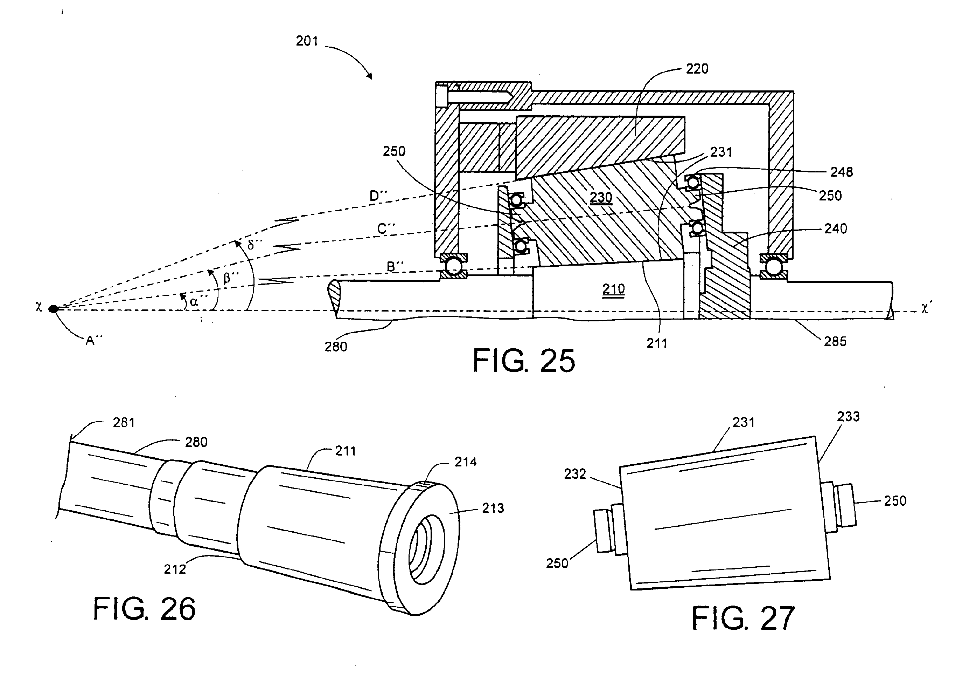

Referring now to Figure 25, it shows the upper half of a longitudinal cross-section of the self-adjustable tractive planetary roller transmission 201. Likely to the embodiments already described, it has on its longitudinal axis X-X' and on the side of the input shaft 280, an intersection point A" or "apex" wherein the following lines defined in the roller transmission 201 converge:

a) a first contact line B" existing between the tractive surface 211 of the sun roller 210 and the tractive surface 231 of every planetary roller 230, the first contact line B" defining, along with the longitudinal axis X-X' of the transmission, a first angle of inclination $\alpha$";

b) the line C" of the longitudinal axis of the mounting shafts 250. Along with the longitudinal axis of the transmission X-X', this line C" defines a second angle of inclination $\beta$"; and

c) a second contact line D" existing between the tractive surface 231 of planetary rollers 230 and the annular tractive track 220. Along with the longitudinal axis X-X' of the transmission, the second contact line D" defines a third angle of inclination $\delta$"; In order to ensure the pure bearing condition and the minimum loss of efficiency in the self-adjustable tractive planetary roller transmission 201, the angles of inclination defined above relate with one another according to the following formula IB):

$$\beta" = 0.5\,(\alpha" + \delta") \qquad\qquad (IB)$$

In this third preferred embodiment of the present invention, having planetary rollers 230 whose mounting shafts 250 may axially move on the rotation bases 248, which are in turn free to move in a radial direction in the planet carrier 240, allows to ensure that apex A" is kept, as well as to maintain the relationship between angles $\alpha$", $\beta$" and $\delta$" according to the formula (IB) as the tractive surfaces of the self-adjustable tractive planetary roller transmission 201 wear out. The apex may also be found on the output shaft 285, but this depends on the way in which planetary rollers 230 are mounted in the planet carrier 240.

In order to depict with more detail other elements being part of the third embodiment of the present invention, reference is particularly made to Figure 26, which shows a side perspective view of the sun roller 210 attached to the input shaft 280 in one piece. Outside the housing, the outer end 281 of the input shaft is connected to a power source (which is not shown in the figures), such as an electric motor or internal combustion engine. Likewise, Figure 26 shows that the sun roller 210, in addition to have the tractive surface 211, is defined by a truncated face 212 and a base 213. In this embodiment, the sun roller 210 is integrally attached to the input shaft 280. The base face 213 of the sun roller 210 has a shoulder 214 in contact with the base face 233 of the planetary rollers 230 clearly noticed in Figure 24. Said shoulder 214 reduces the angular speeds between planetary rollers 230 and the planet carrier 240 during the roller transmission 201 movement (see Figure 24).

On the other hand, Figure 27 shows a side view of a planetary roller 230, wherein the truncated face 232 and base face 233 are seen. In addition to the tractive surface 231, this figure shows the mounting shaft 250 integrally attached to the planetary roller 230 forming one piece. Furthermore, the ends of the mounting shaft extend beyond the truncated face 232 and the base face 233, whereby the planetary roller 230 is mounted on both ends of its shaft 250 to the planet carrier, which will be depicted below.

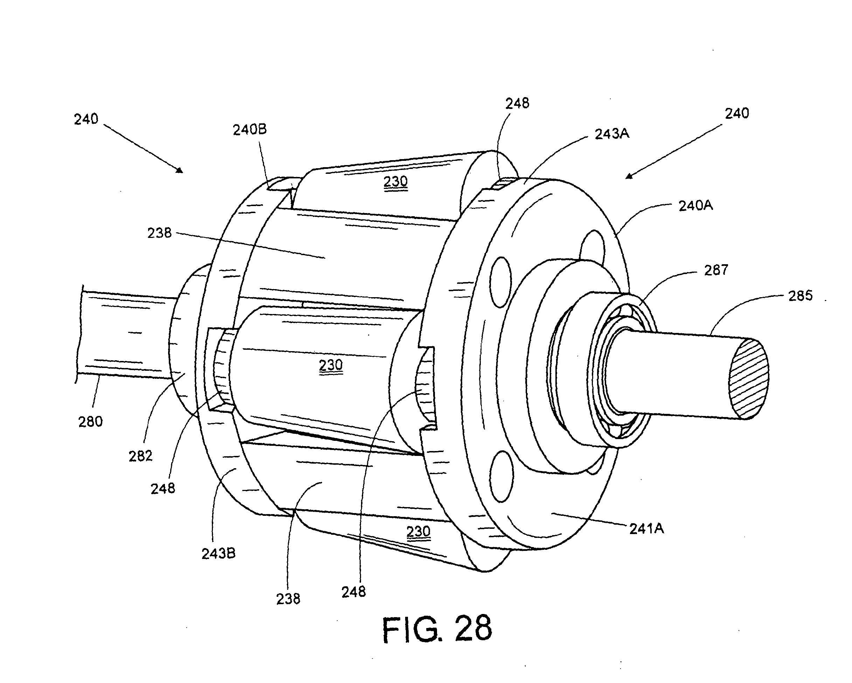

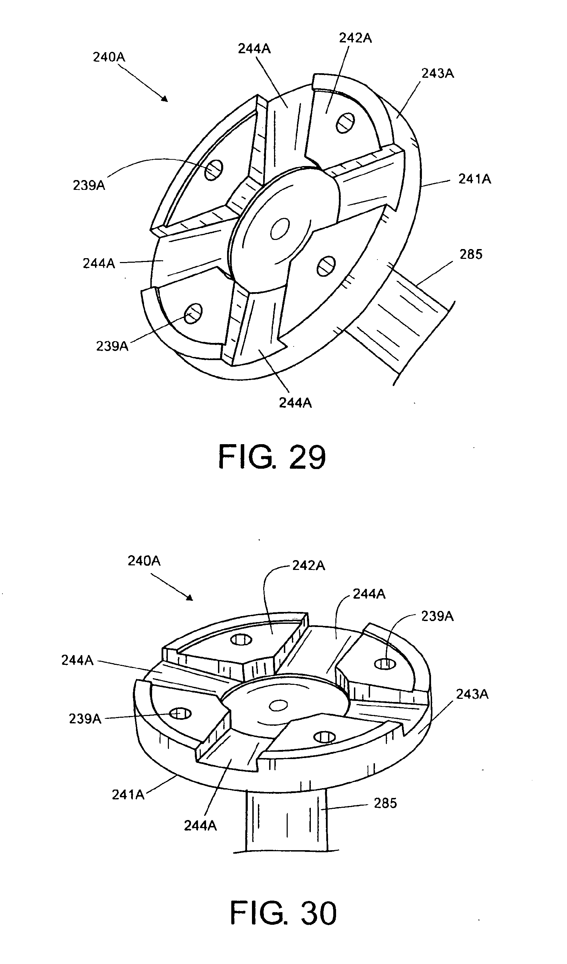

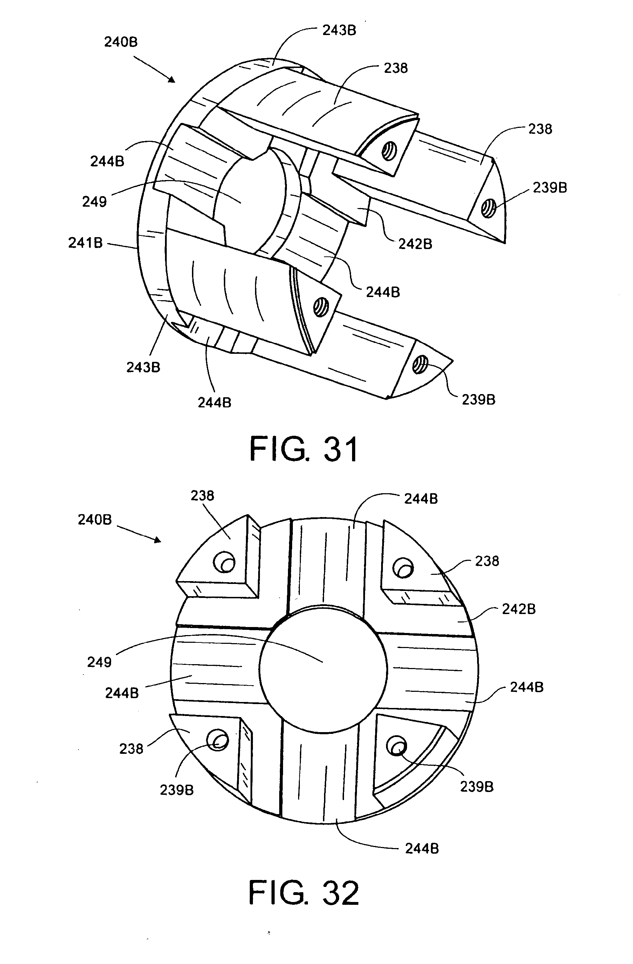

Referring to Figures 28 to 32, it may be said that the planet carrier 240 of this third embodiment is integrated by: A first disk 240A having an outer face 241A, an inner face 242A, a side face 243A, and open radial channels 244A formed on its inner face 242A (see Figures 29 and 30); a second disk 240B having an outer face 241B, an inner face 242B, a side face 243B, and open radial channels 244B formed on its inner face (see Figures 31 and 32). The.separation between the second disk 240B and the first disk 240A is lengthy enough to allow the mounting of the planetary rollers 230 between the inner face 241A of the first disk 240A and the inner face 241 B of the second disk 240B, as it is seen in Figure 28.

As part of the planet carrier 240, a plurality of supports 238 transversally placed between the first disk 240A and the second disk 240B and attached thereto, is provided, so every support 238 is placed between one and another planetary roller 230, giving the planet carrier 240 the shape of a cage. Finally, as it has been mentioned, the planet carrier 240 includes rotation bases 248 freely coupling both ends of the mounting shaft 250 of every planetary roller 230, whereby every planetary roller 230 can adjust its axial position in the planet carrier. For the third embodiment being described, the rotation bases 248 are bearings having a dynamic friction coefficient under 0.1, although other similar devices having such a tractive coefficient may also be used.

For.every planetary roller 230, the rotation base 248 coupled to one end of its mounting shaft 250 is received in a radial channel 244A of the first disk 240A, while the other rotation base 248 coupled to the other end of the mounting shaft 250 is received in a radial channel 244B of the second disk 240B, whereby the rotation bases 248 of each planetary roller 230 can move along radial channels 244A and 244B of the first and second disks 240A and 240B, respectively, consequently adjusting the position of the planetary roller 230 in radial direction.

The radial channels 244A of the first disk 240A, are provided in the shape of a rectangular split or cut having a tilted surface (Figures 29 and 30), such as a ramp whose depth increases towards the center of the first disk 243A. On the other hand, radial channels 244B of the second disk 240B are provided also in the shape of a rectangular slit or cut having a tilted surface (Figures 31 and 32), but their depth increases towards the side face 243B of the second disk 240B; in other words, the depth of radial channels 244B of the second disk varies in opposite direction to that of the first disk 240A, whereby the correct adjustment of the planetary rollers in radial direction is favoured. Figure 32 aditionally shows a central opening 249 to receive the sun roller contacting the panetary rollers.

In Figures 31 and 32 are seen supports 238 integrally attached to the second disk 240B including bores 239B matching with bores 239A of the first disk 240A (Figures 29 and 30). Said bores receive screws or other similar means to attach the first disk 240A to the supports 238 and then forming the cage structure of the planet carrier 240.

The first disk 240A in the planet carrier 240 is preferably attached in an integral manner to the output shaft 285. However, these elements may be joint together by gears, male-female connections, and the like.

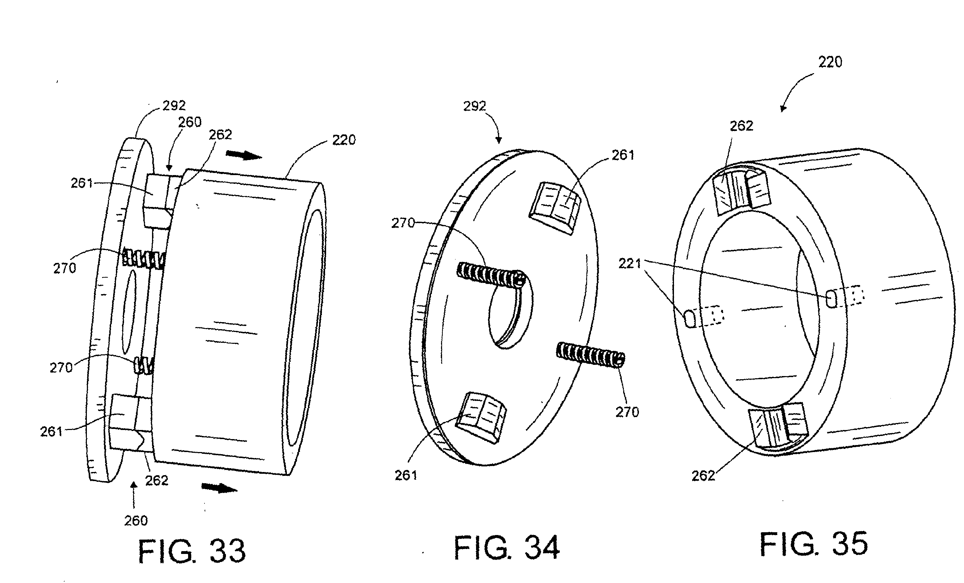

Reference is made now to Figures 33 to 35 in order to depict the axial load means conformation, comprising a plurality of helical springs 270 supported by one end and contacting with the inner part of the housing, particularly with the rear cover 292, and the other end of the spring 270 is received within the wall of the annular tractive track 220, specifically in holes 221, in order to axially press it. The above may also be seen in Figure 24. As another part of the axial load means of this third embodiment, an axial load cam 260 is provided, comprising offsets 261 from side tilted walls formed in the housing, preferably in the rear cover 292. Each offset 261 is received by a geometrically cooperative counterpart, such as the ear 262 from side tilted walls provided in the rear part of the annular tractive track 220.

Axial load means work as follows. At the minimum power demand of the roller transmission, springs 270 exert an axial previous load on the annular tractive track 220 and then, depending on the torsional pair demanded in the roller transmission, the annular track 220 reacts to said demand and slightly rotates, resulting in the tilted walls of offsets 261 making contact and sliding on the titled walls of its counterpart, in other words, ears 262 generates a wedge effect which axially pushes the annular tractive track 220. With the axial load from springs 270 and cam 260, due to the cone effect, the annular track 220 exerts a normal load on the planetary rollers and the sun roller, consequently achieving the required tractive condition to transmit the power. This conformation for the axial load means is very useful for those transmissions used in motor vehicles.

In a not shown embodiment, the geometrically cooperative counterpart of offsets 261 may be provided in the annular tractive track as slits or cooperative recesses making contact with offsets 261.

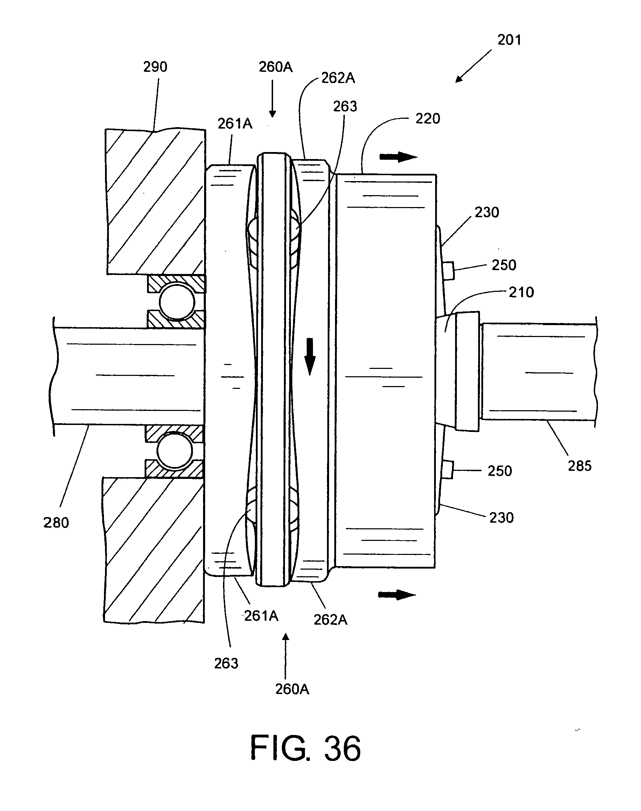

The axial load on the annular tractive track may also be achieved in other manners, as illustrated in Figure 36 which shows a simplified view of the planetary transmission 201, wherein the planet carrier is not represented. However, it must be understood that planetary rollers 230 with their mounting shaft 250 are mounted on the above described planet carrier 240. Likewise, for illustrative purposes, the input shaft 280 and the output shaft 285 are maintained. In Figure 36, the axial load is exerted on the annular tractive track 220 by means of an axial load cam now identified as 260A formed by a first annular section 261A supported by housing 290 and surrounding the input shaft 280; a second annular section 262A attached to the annular tractive track 220; and a plurality of movable cylindrical rollers 263 placed between the first section 261A and the second section 262A. Depending on the torsional pair demanded in the roller transmission, the annular tractive track 220 with the second section 262A slightly rotate on the first section 261A, supported on cylindrical rollers 263, being able to axially push the annular track 220 and achieving therefore the tractive condition required to transmit the power.

From another point of view, due to the cone arrangement of the roller transmission, it is to say, due to the existence of the "apex", when applying an axial load on the annular tractive track, a necessary normal load is generated on the planetary rollers and the sun roller to transmit the angular speed and tangential pair (power).

In the third preferred embodiment being depicted, the roller transmission has 4 planetary rollers. However, it is possible to include from 3 to 12 planetary rollers which number is determined by the already mentioned factors. In this third embodiment, the annular tractive track 220 and the planetary rollers 230 are fully manufactured from metalic, polymeric, or ceramic materials meeting the following specifications: A static friction coefficient over 0.3 for the sun roller 210, the annular tractive track 220, and planetary rollers 230, as well as a dynamic friction coefficient under 0.1 for the rotation base 248, while the hardness for all these elements is higher than Shore A-90. More preferably, said parts of the roller transmission are manufactured from steel, nylon having fiberglass or rubber fillers, and/or acetal polymers having said tractive coefficient and hardness properties.

In the third embodiment of the present invention, the sun roller 210 and the planetary rollers 230 may also be formed by a core and a lining forming its tractive surface. In this embodiment is pretended for the core tho have a high structural rigidity, a dynamic friction coefficient under 0.1, and a hardness higher than the tractive surfaces, in a manner wherein the core may be made of metalic, ceramic, and/or polymeric materials, while the lining is manufactured from the already mentioned materials in the embodiment wherein the planetary rollers 230 and the sun roller 210 are fully manufactured from one material, in other words, the lining is preferably made of steel, nylon having fiberglass or rubber fillers, and/or acetal polymers, these lining materials having a static friction coefficient over 0.3 and a surface hardness higher than Shore A-90.

Generally, one important feature of the self-adjustable tractive planetary roller transmission of the present invention is that it works without using tractive or elasto-hydrodynamic fluids which would increase its cost. However, the roller transmission may optionally include one of said lubricants within its housing, achieving working properly.

As it may be noticed, the roller transmission of the present invention allows maintaining the required tractive condition for its movement by including planetary rollers which may automatically adjust its position as the roller transmission tractive surfaces wear out, regardless the fact that the roller transmission apex is on the side of the input shaft or on the side of the output shaft. Likewise, according to the present invention, the axial load allows all the roller transmission tractive surfaces to be in contact, and generates the required tractive condition to transmit the power. Said axial load may be achieved through the elastic washer and the bearing, the helical spring, the cam, or other similar means pressing only the sun roller. Moreover, the axial load may also be applied to the- annular track by means of the previously depicted load cam. In other words the purpose of the axial load means is to make the roller transmission tractive surfaces to be in contact, which could not be maintained over time if the planetary rollers were not movable in axial and radial directions.

In addition, another advantage of the roller transmission of the present invention is its extremely compact conformation, since there are few free spaces between the pieces thereof. Also, its operation is extremely silent, being under 60 decibels (dB), it has a mechanical efficiency of at least 96%, and it works without vibrations due to its structure and also to the materials selection with which its tractive surfaces are made, making the self-adjustable tractive planetary roller transmission appropriate for appliances, such as washing machines, motor vehicles, and any other device requiring modifying the power supplied by some source under a specific relationship.

Although the above description has made reference to specific embodiments of the present invention, it must be emphasized that several modifications to said embodiments are possible without deviating from the true scope of the invention, such as the number of planetary rollers, manufacturing materials, use of elasto-hydrodynamic lubricants, length of radial channels, the way in which the shafts are received in the housing, and so forth. Therefore, the present invention shall not be limited except for what is set forth in the state of the art and the appended claims.

**Claims**

1. A self-adjustable tractive planetary roller transmission comprising:

   a) a conical sun roller having a base, a truncated face and a tractive surface on its side wall;
   b) an annular tractive track having a conical surface and being concentrically separated from the sun roller;
   c) conical planetary rollers having a base, a truncated face and a tractive surface on its side wall, all placed in a tilted manner between the sun roller tractive surface and the annular tractive track; the tractive surface of each planetary roller contacting the tractive surface of the sun roller and the annular tractive track; the planetary rollers being equidistantly separated from one another around the sun roller and including a mounting shaft;
   d) a planet carrier wherein each planetary roller is rotatory mounted by its mounting shaft and away from the planet carrier to rotate, each planetary roller being furthermore movably mounted in axial and radial directions in the planet carrier to be able to adjust its radial and axial positions between the sun roller tractive surface and the annular tractive track;
   e) an input shaft attached to the sun roller and lined up with respect to the roller transmission longitudinal axis;
   f) an output shaft attached to the planet carrier and lined up with respect to the input shaft;
   g) axial load means pressing the sun roller base; and,
   h) a housing covering the roller transmission and wherein the input shaft is received and from which the output shaft protrudes;

   whereby, as the sun roller tractive surface, the planetary roller tractive surface, or the annular tractive track surface wear out, the axial load means exerts a load on the sun roller which, due to the cone effect, exerts in turn a normal load on the planetary rollers for these to adjust their axial and radial positions to remain pressed between the sun roller and the annular tractive track, achieving the required tractive condition to transmit the power.

2. The self-adjustable tractive planetary roller transmission, according to claim 1, wherein the annular tractive track is integrally formed within the housing.

3. The self-adjustable tractive planetary roller transmission, according to claim 1, wherein the transmission has an "apex" on its longitudinal axis wherein the following lines converge:

   a first contact line existing between the sun roller tractive surface and the tractive surface of each planetary roller; the first contact line defining, along with the roller transmission longitudinal axis a first angle of inclination $\alpha$; the line of the longitudinal axis of mounting shafts which, along with the roller transmission longitudinal axis, defines a second angle of inclination $\beta$; and,

a second contact line existing between the tractive surface of the planetary rollers and the annular tractive track, the second contact line defining with the roller transmission longitudinal axis, a third angle of inclination δ;

wherein, in order to ensure the pure rolling condition and the minimum loss of efficiency in the rol!er transmission, the angles of inclination are related to each other according to the formula (1):

$$\beta = 0.5\,(\alpha + \delta) \qquad\qquad (I)$$

4. The self-adjustable tractive planetary roller transmission, according to claim 3, wherein the apex is located on the output shaft.

5. The self-adjustable tractive planetary roller transmission, according to claim 3, wherein the apex is located on the input shaft.

6. The self-adjustable tractive planetary roller transmission, according to claim 1, wherein the mounting shaft of each planetary roller is freely received inside thereof, whereby each planetary roller moves on its shaft to adjust its axial position, and the planet carrier is a disk having an outer face, an inner face, and a side face, the planet carrier being provided, on its side face, with open radial channels crossing from side to side the width of the planet carrier; each radial channel receiving an end of the mounting shaft of one of the planetary rollers, whereby the mounting shaft can move radially along the radial channel and consequently, each planetary roller adjusts its radial position in the planet carrier.

7. The self-adjustable tractive planetary roller transmission, according to claim 6, wherein the planet carrier is provided on its inner face with shaft guides associated to each open radial channel, each one of said guides helping the mounting shaft to keeping the planetary rollers tilted in the planet carrier; said guides being hollow protrusions having a truncated cone shaped wall extending upwards and in a tilted manner from the inner face of the planet carrier and over the edge of each open radial channel.

8. The self-adjustable tractive planetary roller transmission, according to claim 7, wherein the mounting shaft of the planetary rollers includes at one of its ends: a head; a longitudinal coupling section next to the head having a smaller diameter than the diameter of the mounting shaft; and, a radial wall delimiting the longitudinal coupling section, the head being coupled in a recess formed in the outer face of the planet carrier and around the edge of each radial channel, and the coupling section has enough length to be received inside each open radial channel and its respective shaft guide; both the radial channel and its shaft guide having an smaller inner diameter than the diameter of the mounting shaft and larger than the diameter of the coupling section, whereby the head and said radial wall keep the mounting shaft fixed in axial direction in the planet carrier.

9. The self-adjustable tractive planetary roller transmission, according to claim 7, wherein each planetary roller has a longitudinal conduit on its central part to receive the mounting shaft; and a tilted wall connecting its truncated face with the longitudinal conduit, said tilted wall having similar inclination and dimension than the outer wall of each shaft guide included in the planet carrier.

10. The self-adjustable tractive planetary roller transmission, according to claim 6, wherein the planet carrier is provided on its inner face, with adjustment spaces preventing the contact of the planet carrier with the truncated face of the planetary rollers when they adjust their radial and axial positions.

11. The self-adjustable tractive planetary roller transmission, according to claim 10, wherein said adjustment spaces are provided in the shape of recesses having a circular perimeter and a tilted surface with respect to the inner face surface of the planet carrier, said recesses having a maximum depth on the side face of the planet carrier.

12. The self-adjustable tractive planetary roller transmission, according to claim 1, wherein each planetary roller with its mounting shaft are integrally attached in one piece; and the planet carrier is a disk having an outer face, an inner face, and a side face; the planet carrier being provided on its side face with open radial channels crossing from side to side the planet carrier width, which furthermore includes rotation bases fixed in axial direction wherein each of them freely receives and end of each mounting shaft, whereby each planetary roller can adjust its axial position in the planet carrier when its shaft moves inside the rotation base; each rotation base being coupled in a radial channel whereby every rotation base can move radially along the radial channel and consequently, the planetary roller adjusts its radial position.

**13.** The self-adjustable tractive planetary roller transmission, according to claim 12,
wherein each rotation base is a bushing having a head comprising a front face in contact with the inner face of the planet carrier, as well as a rear face in contact with the base of the corresponding planetary roller, the head having a larger diameter than the width of every radial channel to be fixed in axial direction, the bushing having also a longitudinal conduit receiving the mounting shaft of the planetary roller.

**14.** The self-adjustable tractive planetary roller transmission, according to claim 13,
wherein a bearing is included in said conduit to facilitate the rotation of the mounting shaft of the planetary roller.

**15.** The self-adjustable tractive planetary roller transmission, according to claim 13,
wherein each rotation base is manufactured from a material selected from the group comprising metalic, polymeric and ceramic materials; said materials having a dynamic friction coefficient under 0.1 and a surface hardness higher than Shore A-90.

**16.** The self-adjustable tractive planetary roller transmission, according to claim 15,
wherein each rotation base is manufactured from a material selected from the group comprising steel, nylon with fiberglass or rubber fillers, and acetal polymers having said tractive coefficient and said surface hardness.

**17.** The self-adjustable tractive planetary roller transmission, according to claim 1,
wherein the axial load means are an elastic washer supported by the housing and surrounding the input shaft; and, a bearing in contact with the washer and mounted on a circumferential seat formed next to the sun roller base, the bearing further being in contact with the planetary rollers, whereby the washer continuously presses the bearing to transmit the axial load to the sun roller and, at the same time, the bearing when being in contact with the planetary rollers, reduces the relative angular speeds between the planetary rollers, the sun roller, and the elastic washer.

**18.** The self-adjustable tractive planetary roller transmission, according to claim 17,
wherein the bearing is selected from the group comprising a cylinder bearing, a ball bearing and a cone bearing.

**19.** The self-adjustable tractive planetary roller transmission, according to claim 1,
wherein the axial load means are a helical spring located between the output shaft and the sun roller base.

**20.** The self-adjustable tractive planetary roller transmission, according to claim 19,
wherein a portion of the helical spring is housed inside the cavity formed in the inner end of the output shaft, while the rest of the spring protrudes from said cavity to be in contact with and to be supported by a depression included in the sun roller base.

**21.** The self-adjustable tractive planetary roller transmission, according to claim 19,
wherein the axial load means further include a flat washer placed on the sun roller and around a shoulder integrally formed around the sun roller base face, the flat washer reducing the relative angular speeds between the planetary rollers and the sun roller.

**22.** The self-adjustable tractive planetary roller transmission, according to claim 1,
wherein the sun roller is integrally attached to the input shaft in one piece.

**23.** The self-adjustable tractive planetary roller transmission, according to claim 1,
wherein the planetary roller transmission has from 3 to 12 planetary rollers.

**24.** The self-adjustable tractive planetary roller transmission, according to claim 1,
wherein the housing includes a pair of hollow axial extensions having a cylindrical shape, one of said extensions receiving and carrying the input shaft into the housing, while the other axial extension carries the output shaft towards the outer part of the housing.

**25.** The self-adjustable tractive planetary roller transmission, according to claim 24, further comprising a first bushing placed between the input shaft and the axial extension receiving said input shaft, the first bushing facilitates the rotation and centering of the input shaft.

26. The self-adjustable tractive planetary roller transmission, according to claim 24, further comprising a second bushing placed between the output shaft and the axial extension from which said output shaft protrudes, the second bushing facilitates the rotation and centering of the output shaft.

27. The self-adjustable tractive planetary roller transmission, according to claim 1,
wherein the sun roller, the annular tractive track and the planetary rollers are all manufactured from a material selected from the group comprising metalic, polymeric, and ceramic materials, said materials having a static friction coefficient over 0.3 and a surface hardness higher than Shore A-90.

28. The self-adjustable tractive planetary roller transmission, according to claim 27,
wherein the sun roller, the annular tractive track and the planetary rollers are manufactured from a matereial selected from the group comprising: steel, nylon with fiberglass or rubber fillers, and acetal polymers having said tractive coefficient and said surface hardness.

29. The self-adjustable tractive planetary roller transmission, according to claim 1,
wherein the sun roller and the planetary rollers comprise a core and a lining forming its tractive surfaces.

30. The self-adjustable tractive planetary roller transmission, according to claim 29,
wherein said core is manufactured from a material selected from the group comprising metalic, ceramic, and polymeric materials; the core materials having a dynamic friction coefficient under 0.1 and a surface hardness higher than Shore A-90, while the lining is manufactured from a material selected from the group comprising steel, nylon having fiberglass or rubber filleres, and acetal polymers, the materials of the lining having a static friction coefficient over 0.3 and a surface hardness higher than Shore A-90.

31. The self-adjustable tractive planetary roller transmission, according to claim 1,
wherein the transmission includes optionally an elasto-hydrodynamic lubricant inside its housing.

32. A self-adjustable tractive planetary roller transmission comprising:

a) a conical sun roller having a base, a truncated face, and a tractive surface on its side wall;
b) an annular tractive track having a conical surface concentrically separated from the sun roller;
c) conical planetary rollers having a base, a truncated face and a tractive surface on its side wall, all placed in a tilted manner between the sun roller tractive surface and the annular tractive track, so that the tractive surface of each planetary roller is in contact with the sun roller tractive surface and the annular tractive track, said planetary rollers being equidistantly separated from one another around the sun roller and including a mounting shaft;
d) a planet carrier wherein every planetary roller is rotatory mounted by its mounting shaft and away from the planet carrier to rotate, each planetary roller being furthermore movably mounted in axial and radial directions in the planet carrier for every planetary roller to adjust its radial and axial positions between the sun roller tractive surface and the annular tractive track;
e) an input shaft attached to the sun roller and lined up with respect to the roller transmission longitudinal axis;
f) an output shaft attached to the planet carrier and lined up with respect to the input shaft;
g) axial load means pressing the annular tractive track; and,
h) a housing covering the roller transmission to receive the input shaft and from which the output shaft protrudes;

whereby as the sun roller tractive surface, the planetary roller tractive surface, or the annular tractive track surface wear out, said axial load means exert a load on the annular tractive track which, due to the cone effect, exert in turn a normal load on the planetary rollers for these to adjust their axial and radial positions to remain pressed between the sun roller and the annular tractive track, achieving maintaining the required tractive condition to transmit the power.

33. The self-adjustable tractive planetary roller transmission, according to claim 32,
wherein the transmixion has an apex on its longitudinal axis wherein the following lines converge:

a first contact line existing between the sun roller tractive surface and the tractive
surface of each one of the planetary rollers, the first contact line defining along with

the roller transmission longitudinal axis, a first angle of inclination "α";
the line of the longitudinal axis of the mounting shafts which with the roller
transmission longitudinal axis, defines a second angle of inclination β"; and,
a second contact line existing between the tractive surface of the planetary rollers
and the annular tractive track, the second contact line defining with the roller
transmission longitudinal axis, a third angle of inclination "δ";

wherein, in order to ensure the pure bearing condition and the minimum loss of efficiency in the roller transmission, the angles of inclination are related to each other according to the formula (IB):

$$\beta" = 0.5 \, (\alpha" + \delta")  \qquad (IB)$$

34. The self-adjustable tractive planetary roller transmission, according to claim 33,
wherein the apex is located on the output shaft.

35. The self-adjustable tractive planetary roller transmission, according to claim 33,
wherein the apex is located on the input shaft.

36. The self-adjustable tractive planetary roller transmission, according to claim 32,
wherein each planetary roller with its mounting shaft are integrally attached in one piece, the mounting shaft ends extending on the base face and the truncated face of the planetary roller; and the planet carrier comprises:

a first disk having an outer face, an inner face, a side face and open radial channels formed on its inner face;
a second disk having an outer face, an inner face, a side face and open radial channels formed on its inner face, the second disk being separated from the first disk by an enough length to mount the planetary rollers between the inner face of the first disk and the inner face of the second disk;
a plurality of supports transversally located between the first disk and the second disk and attached thereto, so that each support is between one and another planetary roller giving the planet carrier a cage shape; and,
rotation bases freely coupling with both ends of the mounting shaft of every planetary roller;

whereby each planetary roller can adjust its axial position in the planet carrier; for every planetary roller, the rotation base coupled at an end of its mounting shaft is coupled in a radial channel of the first disk, while the other rotation base coupled at the other end of the mounting shaft is coupled in a radial channel of the second disk, whereby both rotation bases of a planetary roller can move on the radial channels of the first and second disks, consequently adjusting the roller position in radial direction.

37. The self-adjustable tractive planetary roller transmission, according to claim 36,
wherein each radial channel of the first disk is provided in the shape of a rectangular cut having a tilted bottom, whose depth increases towards the center of the first disk.

38. The self-adjustable tractive planetary roller transmission, according to claim 36,
wherein each radial channel of the second disk is provided in the shape of a rectangular cut having a tilted bottom, whose depth increases towards the side face of the second disk.

39. The self-adjustable tractive planetary roller transmission, according to claim 36,
wherein the rotation bases are bearings.

40. The self-adjustable tractive planetary roller transmission, according to claim 36,
wherein the first disk of the planet carrier is integrally attached to the output shaft in one piece.

41. The self-adjustable tractive planetary roller transmission, according to claim 36,
wherein the supports are integrally attached to the second disk in one piece.

42. The self-adjustable tractive planetary roller transmission, according to claim 32,
wherein the axial load means comprises:

a plurality of helical springs with one end in contact with the inner part of the housing and the other end received inside the wall of the annular tractive track to axially press it; and,

an axial load cam comprising offsets of tilted side walls formed inside the housing, every offset being received in a geometrical cooperative counterpart provided in the

rear wall of the annular tractive track;

whereby, at the minimum power demand of the roller transmission, the springs exert an axial previous load on the annular tractive track and then, depending on the tangential pair demanded in the roller transmission, the annular track reacts to said demand and slightly rotates, resulting in the tilted walls of offsets making contact with the geometrically cooperative counterpart, generating a wedge effect axially pushing the annular tractive track; with the axial load from the springs and the cam, the annular track transmits said axial load as a normal load on the planetary rollers and the sun roller, achieving the required tractive condition to transmit the power.

43. The self-adjustable tractive planetary roller transmission, according to claim 32,
wherein the geometrically cooperative counterpart is an ear having tilted walls or a slit having tilted walls provided in the rear wall of the annular tractive track.

44. The self-adjustable tractive planetary roller transmission, according to claim 32,
wherein the axial load means is a load cam comprising:

a first annular section being supported on the housing around the input shaft; a second annular section attached to the annular tractive track; and,
a plurality of movable cylindrical rollers placed between the first and the second sections;

whereby, depending on the torsional pair demanded in the roller transmission, the annular tractive track and the second section slightly rotate on the first section supporting on the cylinders to move axially the annular tractive track, achieving the required tractive condition to transmit the power.

45. The self-adjustable tractive planetary roller transmission, according to claim 32,
wherein the sun roller is integrally attached to the input shaft in one piece.

46. The self-adjustable tractive planetary roller transmission, according to claim 32,
wherein the planetary roller transmission has from 3 to 12 planetary rollers.

47. The self-adjustable tractive planetary roller transmission, according to claim 32,
wherein the sun roller, the annular tractive track and the planetary rollers are all manufactured from a material selected from the group comprising: metalic, polymeric and ceramic materials, said materials having a static friction coefficient over 0.3 and a surface hardness higher than Shore A-90.

48. The self-adjustable tractive planetary roller transmission, according to claim 47,
wherein the sun roller, the annular tractive track and the planetary rollers are manufactured from a material selected from the group comprising: steel, nylon with fiberglass or rubber fillers and acetal polymers having said tractive coefficient and said surface hardness.

49. The self-adjustable tractive planetary roller transmission, according to claim 32,
wherein the sun roller and the planetary rollers comprise a core and a lining forming its tractive surfaces.

50. The self-adjustable tractive planetary roller transmission, according to claim 49,
wherein said core is manufactured from a material selected from the group of materials comprising metalic, ceramic and polymeric materials, the materials of the core having a dynamic friction coefficient under 0.1 and a surface hardness higher than Shore A-90, while the lining is manufactured from a material selected from the group comprising steel, nylon having fiberglass or rubber filleres, and acetal polymers, the materials of the lining having a static friction coefficient over 0.3 and a surface hardness higher than Shore A-90.

51. The self-adjustable tractive planetary roller transmission, according to claim 32, the transmission including optionally an elasto-hydrodynamic lubricant inside its housing.

**FIG. 1**

FIG. 2

FIG. 3

EP 1 830 103 A1

FIG. 4

FIG. 5

FIG. 6

FIG. 7

FIG. 8

FIG. 9

FIG. 10

FIG. 11

FIG. 12

EP 1 830 103 A1

FIG. 13

EP 1 830 103 A1

FIG. 14

FIG. 15

FIG. 16

FIG. 17

FIG. 18

FIG. 19

140

144

144

149

142

144

144

141

143

## FIG. 20

185

189

188

## FIG. 21

151

152

153

148

154

## FIG. 22

FIG. 23

EP 1 830 103 A1

FIG. 24

FIG. 25

FIG. 26

FIG. 27

EP 1 830 103 A1

FIG. 28

240A 244A 242A

243A

239A

241A

244A

285

239A

244A

## FIG. 29

240A 242A

244A

244A 239A

239A 243A

241A 285

244A

## FIG. 30

240B

243B

238

238

244B

249

239B

241B

242B

244B

243B

244B

239B

# FIG. 31

240B

238

244B

238

249

242B

244B

244B

238

239B

239B

244B

# FIG. 32

FIG. 35

FIG. 34

FIG. 33

FIG. 36

## INTERNATIONAL SEARCH REPORT

International application No.

PCT/ IB 2005/003725

| A. CLASSIFICATION OF SUBJECT MATTER |
|---|
| *F16H 13/08* (2006.01) |
| According to International Patent Classification (IPC) or to both national classification and IPC |

| B. FIELDS SEARCHED |
|---|
| Minimum documentation searched (classification system followed by classification symbols) |
| F16H |
| Documentation searched other than minimum documentation to the extent that such documents are included in the fields searched |
| |
| Electronic data base consulted during the international search (name of data base and, where practicable, search terms used) |
| CIBEPAT, EPODOC, PAJ, WPI |

C. DOCUMENTS CONSIDERED TO BE RELEVANT

| Category* | Citation of document, with indication, where appropriate, of the relevant passages | Relevant to claim No. |
|---|---|---|
| A | US 3490311 A (KENZO OKABE) 20.01.1970 column 3, lines 24-56; column 2, lines 14-23; figure 1 | 1, 3, 4, 6, 32- 34, 36 |
| A | US 4846008 A (C.E. KRAUS) 11.07.1989 abstract; column 4, lines 26-43; column 5, lines 18-22; figure 4 | 1- 4, 6 |
| A | US 5046996 A (E. HORVATH) 10.09.1991 the entire document | 1, 32 |
| A | GB 1175299 A (SILENTBLOCK AU) 23.12.1969 the entire document | 1, 32 |
| A | GB 2272955 A (PERRY) 01.06.1994 the entire document | 1, 32 |
| A | US 1993051 A (C.DELL et al) 05.03.1935 Documento completo | 1, 32 |

☐ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 8 mayo 2006 (08.05.2006) | 10 MAYO 2006 (10-05-2006) |
| Name and mailing address of the ISA/ O.E.P.M. Paseo de la Castellana, 75 28071 Madrid, España. Facsimile No. 34 91 3495304 | Authorized officer S. Gómez Fernández Telephone No. + 34 91 3495376 |

Form PCT/ISA/210 (second sheet) (July 1992)

**INTERNATIONAL SEARCH REPORT**

Information on patent family members

| International Application No |
|---|
| PCT/ IB 2005/003725 |

| Patent document cited in search report | Publication date | Patent familiy member(s) | Publication date |
|---|---|---|---|
| US 3490311 A | 20.01.1970 | GB 1201480 A | 05.08.1970 |
| US 4846008 A | 11.07.1989 | Ninguno | |
| US 5046996 A | 10.09.1991 | AT 184388 A | 15.04.1991 |
| | | CA 1318156 A | 25.05.1993 |
| | | CN 1039474 A | 07.02.1990 |
| | | EP 352252 A | 24.01.1990 |
| | | JP 2072239 A | 12.03.1990 |
| | | SU 1736347 A | 23.05.1992 |
| GB 1175299 A | 23.12.1969 | Ninguno | |
| GB 2272955 A | 01.06.1994 | WO 9412811 A | 09.06.1994 |
| US 1993051 A | 05.03.1935 | Ninguno | |

Form PCT/ISA/210 (patent family annex) (July 1992)

39

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4846008 A
- JP 5071483 A
- US 6406399 B